# EUROPEAN PATENT SPECIFICATION

(11) **EP 3 759 792 B1**
(45) Date of publication and mention of the grant of the patent: **06.07.2022**
(21) Application number: 19712077.7
(22) Date of filing: 01.03.2019
(51) Int. Cl.: H02J 50/40, H02J 50/20, H02J 50/05, G06F 1/26, H02J 7/32

(54) **APPARATUS, SYSTEMS, AND METHODS FOR SHARING POWER BETWEEN DEVICES VIA WEARERS' BODIES**
VORRICHTUNG, SYSTEME UND VERFAHREN ZUR GEMEINSAMEN LEISTUNGSVERTEILUNG ZWISCHEN VORRICHTUNGEN ÜBER KÖRPER DES TRÄGERS
APPAREIL, SYSTÈMES ET PROCÉDÉS DE PARTAGE DE PUISSANCE ENTRE DES DISPOSITIFS PAR L'INTERMÉDIAIRE DU CORPS DE L'UTILISATEUR

(30) Priority: 02.03.2018 US 201815910624
(43) Date of publication of application: 06.01.2021
(73) Proprietor: Facebook Technologies, LLC, Menlo Park, CA 94025 (US)
(72) Inventor: SHAHMOHAMMADI, Mohsen, Menlo Park, CA 94025 (US)
(74) Representative: Murgitroyd & Company
(86) International application number: PCT/US2019/020369
(87) International publication number: WO 2019/169310

(56) References cited:
- WO-A1-2011/106798
- WO-A2-2013/118116
- US-A1- 2014 051 965
- US-A1- 2016 094 064
- US-A1- 2016 248 481
- US-B1- 6 211 799
- US-B2- 6 809 498

## Description

### BACKGROUND

This disclosure relates generally to wearable devices, and more specifically to head-mounted display devices and systems.

Virtual reality (VR) and augmented reality (AR) headsets are gaining in popularity for use in a growing number of activities. Such headsets may integrate visual information into a user's field of view to enhance their surroundings or allow them to step into immersive three-dimensional environments. While virtual reality and augmented reality headsets are often utilized for gaming and other entertainment purposes, they are also commonly employed for purposes outside of recreation - for example, governments may use them for military training simulations, doctors may use them to practice surgery, and engineers may use them as visualization aids. Virtual and augmented reality systems are also increasingly recognized for their utility in facilitating inter-personal interactions between individuals in a variety of contexts.

Head-mounted devices, such as virtual and augmented reality headsets, typically need to be light in weight and have small profiles. Because of weight and size constraints, conventional head-mounted devices have typically included wired power connections. While wired connections may be capable of providing more than enough power to head-mounted devices, wired connections may unsatisfactorily confine or encumber users' movements, especially in virtual and augmented reality contexts where immersive experiences are often desired. For at least this reason, many conventional head-mounted devices (e.g., smart glasses) are now powered by batteries rather than by wired power connections. Unfortunately, weight, size, and form-factor constraints of many of these head-mounted devices may leave little to no room for batteries, which may lead to power constraints, limited power budgets, and/or a need to charge these devices frequently. The instant disclosure, therefore, identifies and addresses a need for apparatus, systems, and methods for wirelessly supplying power to wearable devices, especially virtual and augmented reality headsets. In order to power an apparatus, it is state of the art that the human body can be used as conductor. Documents US2014/051965 and US6809498 are representative examples of the state of the art. Nevertheless, said state of the art documents are not adapted to be used with a headset.

### SUMMARY

As will be described in greater detail below, the instant disclosure describes various apparatus, systems, and methods for harvesting energy via wearers' bodies. A head-mounted energy-harvesting device includes (1) an electronic component that is powered using a direct current, (2) a human-body coupler configured to conduct an artificial body-bound signal from a user's body, (3) a receiving subsystem electrically connected to the human-body coupler and configured to receive the artificial body-bound signal, and (4) a rectifying subsystem coupled to the receiving subsystem and configured to convert the artificial body-bound signal into the direct current for use by the electronic component. The artificial body-bound signal has been transmitted by an energy-supplying device through the user's body, and the human-body coupler may include a first electrode and a second electrode. In some examples, the human-body coupler is capacitively coupled to the user's body, and the head-mounted energy-harvesting device may further include (1) a medial surface that faces the user's head when the head-mounted energy-harvesting device is worn by the user and (2) a lateral surface that faces away from the user's head when the head-mounted energy-harvesting device is worn by the user. In these examples, the first electrode may be coupled to the medial surface of the head-mounted energy-harvesting device such that the first electrode contacts the user's head, and the second electrode may be coupled to the lateral surface of the head-mounted energy-harvesting device such that the second electrode contacts air surrounding the user's body. Additionally or alternatively, the human-body coupler may be galvanically coupled to the user's body, and the head-mounted energy-harvesting device may further include a medial surface that faces the user's head when the head-mounted energy-harvesting device may be worn by the user. In these examples, the first electrode may be coupled to the medial surface of the head-mounted energy-harvesting device such that the first electrode contacts the user's head, and the second electrode may be coupled to the medial surface of the head-mounted energy-harvesting device such that the second electrode contacts the user's head.

In some examples, the head-mounted energy-harvesting device is a head-mounted display. In at least one example, the head-mounted display may further include a facial-interface cushion dimensioned to abut a facial portion of the user, and the first electrode may form an integral part of the facial-interface cushion. In some examples, the head-mounted display may further include (1) a display, (2) a bridge coupled to the display and dimensioned to rest on the nose of the user, and (3) a temple coupled to the display and dimensioned to rest on an ear of the user. In some examples, the first electrode may form an integral part of the bridge and/or the temple. In at least one example, the head-mounted energy-harvesting device may be a smart contact lens configured to enhance the user's vision.

A corresponding energy-exchanging system may include (1) an energy-supplying device and (2) a head-mounted energy-harvesting device. The energy-supplying device may include (1) an energy supply, (2) a human-body coupler that is configured to apply an artificial body-bound signal to a user's body and that includes a first electrode and a second electrode, and (3) a transmitting subsystem electrically connected to the energy supply and the human-body coupler and configured to transmit the artificial body-bound signal through the user's body. The head-mounted energy-harvesting device includes (1) an electronic component that is operable using a direct current, (2) an additional human-body coupler that is configured to conduct the artificial body-bound signal from the user's body and that includes a third electrode and a fourth electrode, (3) a receiving subsystem electrically connected to the additional human-body coupler and configured to receive the artificial body-bound signal, and (4) a rectifying subsystem coupled to the receiving subsystem and configured to convert the artificial body-bound signal into the direct current for use by the electronic component.

In some examples, the human-body coupler may be capacitively coupled to the user's body, and the energy-supplying device may further include (1) a medial surface that faces the user's body when the energy-supplying device is worn by the user and (2) a lateral surface that faces away from the user's body when the energy-supplying device is worn by the user. In these examples, the first electrode may be coupled to the medial surface of the energy-supplying device such that the first electrode contacts the user's body, and the second electrode may be coupled to the lateral surface of the energy-supplying device such that the second electrode contacts air surrounding the user's body. Additionally or alternatively, the human-body coupler may be galvanically coupled to the user's body, and the energy-supplying device may further include a medial surface that faces the user's body when the energy-supplying device is worn by the user. In these examples, the first electrode may be coupled to the medial surface of the energy-supplying device such that the first electrode contacts the user's body, and the second electrode may be coupled to the medial surface of the energy-supplying device such that the first electrode contacts the user's body.

In some examples, the head-mounted energy-harvesting device may be a head-mounted display. In at least one example, the head-mounted display may further include a facial-interface cushion dimensioned to abut a facial portion of the user, and the third electrode may form an integral part of the facial-interface cushion. In some examples, the energy-supplying device may be a smart phone, a smart watch, or an auxiliary battery pack. In at least one example, the auxiliary battery pack may be configured to be worn around at least one of the user's wrist or the user's neck. In other examples, the energy-supplying device may be a laptop computing device or a hand-held controller used by a virtual-reality system or an augmented-reality system.

A corresponding computer-implemented method includes (1) receiving, through a human-body coupler of a head-mounted energy-harvesting device, an artificial body-bound signal from a user's body, (2) converting, at the head-mounted energy-harvesting device, the artificial body-bound signal into an direct current for use by an electronic component of the head-mounted energy-harvesting device, and (3) applying, at the head-mounted energy-harvesting device, the direct current to the electronic component. The computer-implemented method includes transmitting, from the energy-supplying device to the head-mounted energy-harvesting device, the artificial body-bound signal through the user's body by applying the artificial body-bound signal to an additional human-body coupler of the energy-supplying device.

Features from any of the above-mentioned embodiments may be used in combination with one another in accordance with the general principles described herein. These and other embodiments, features, and advantages will be more fully understood upon reading the following detailed description in conjunction with the accompanying drawings and claims.

### BRIEF DESCRIPTION OF THE DRAWINGS

The accompanying drawings illustrate a number of exemplary embodiments and are a part of the specification. Together with the following description, these drawings demonstrate and explain various principles of the instant disclosure.
FIG. 1 is a block diagram of an exemplary galvanically coupled energy-exchanging system in accordance with some embodiments.
FIG. 2 is a block diagram of an exemplary capacitively coupled energy-exchanging system in accordance with some embodiments.
FIG. 3 is a model diagram of the exemplary galvanically coupled energy-exchanging system illustrated in FIG. 1 in accordance with some embodiments.
FIG. 4 is a model diagram of the exemplary capacitively coupled energy-exchanging system illustrated in FIG. 2 in accordance with some embodiments.
FIG. 5 is a front view of a user wearing components of an exemplary energy-exchanging system in accordance with some embodiments.
FIG. 6 is a front view of another user wearing components of another exemplary energy-exchanging system in accordance with some embodiments.
FIG. 7 is a perspective top view of an exemplary head-mounted display device in accordance with some embodiments.
FIG. 8 is a perspective bottom view of the exemplary head-mounted display device illustrated in FIG. 7 in accordance with some embodiments.
FIG. 9 is a front view of exemplary electrodes of the exemplary head-mounted display device illustrated in FIG. 7 in accordance with some embodiments.
FIG. 10 is a perspective view of an exemplary head-mounted display device in accordance with some embodiments.
FIG. 11 is a perspective view of exemplary electrodes of the exemplary head-mounted display device illustrated in FIG. 10 in accordance with some embodiments.
FIG. 12A is a front view of an exemplary smart contact lens in accordance with some embodiments.
FIG. 12B is a cross-sectional view of the smart contact lens illustrated in FIG. 12A in accordance with some embodiments.
FIG. 13 is a model diagram of the smart contact lens illustrated in FIG. 12A in accordance with some embodiments.
FIG. 14 is a top view of an exemplary energy-source device in accordance with some embodiments.
FIG. 15A is a perspective top view of an exemplary energy-source device in accordance with some embodiments.
FIG. 15B is a perspective bottom view of the exemplary energy-source device illustrated in FIG. 15A in accordance with some embodiments.
FIG. 16 is a top view of an exemplary epidermal electronic device in accordance with some embodiments.
FIG. 17 is a flow diagram of an exemplary method for harvesting energy via wearers' bodies in accordance with some embodiments.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the instant disclosure covers all modifications, equivalents, and alternatives falling within the scope of the appended claims.

### DETAILED DESCRIPTION OF EXEMPLARY EMBODIMENTS

The present disclosure is generally directed to apparatus, systems, and methods for harvesting energy via wearers' bodies. As will be explained in greater detail below, embodiments of the instant disclosure may enable a head-mounted device, such as a head-mounted display or a smart contact lens, to receive energy through a wearer's body from other remote energy-supplying devices (e.g., smart phones, smart watches, auxiliary battery packs, and/or laptop or desktop computers) worn or contacted by the wearer. By using a wearer's body as a low-loss energy transfer medium, embodiments of the instant disclosure may enable wireless head-mounted devices to efficiently harvest energy. Moreover, by enabling head-mounted devices to harvest energy from a wearer's body, embodiments of the instant disclosure may enable head-mounted devices to be designed with smaller batteries or designed to consume more power than existing head-mounted devices without the need for users to consciously charge their head-mounted devices at all or as often.

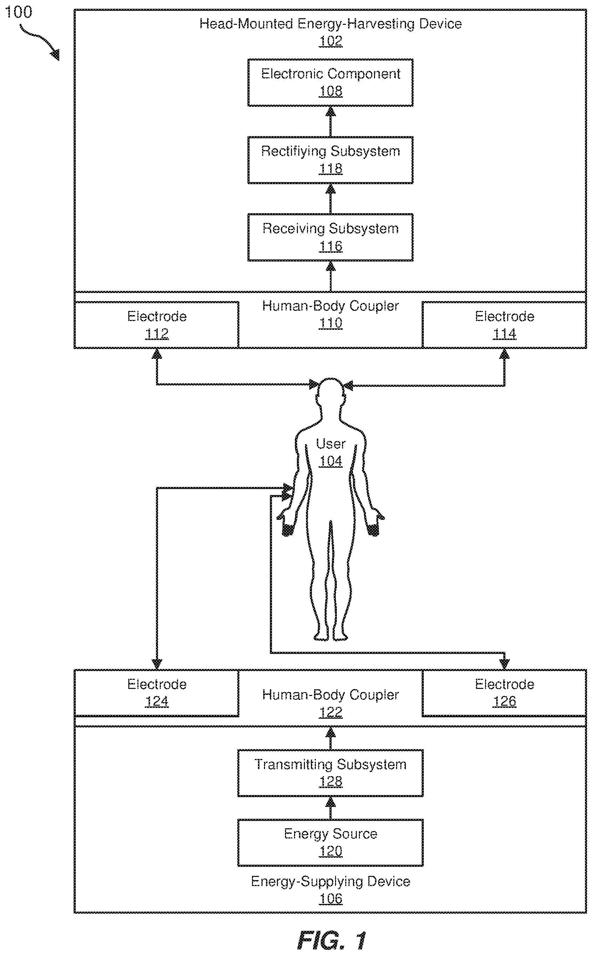

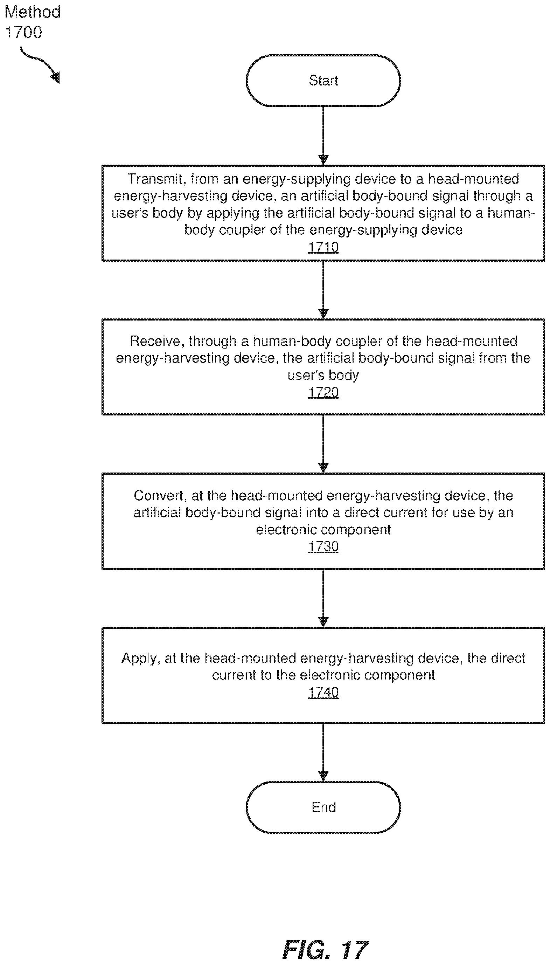

The following will provide, with reference to FIGS. 1-16, examples of energy-exchanging systems and devices. In addition, the discussion corresponding to FIG. 17 will provide examples of methods for exchanging and harvesting energy via a wearer's body.

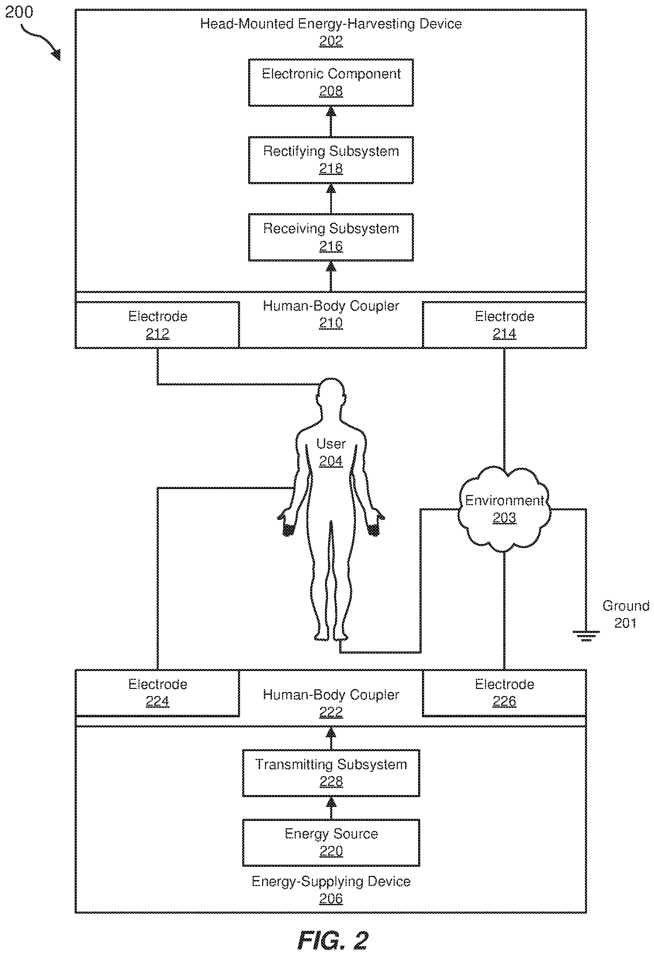

FIGS. 1 and 2 show exemplary energy-exchanging systems for facilitating the transfer and reception of energy between two devices that are worn or connected to a user's body according to some embodiments. As will be described in greater detail below, these energy-exchanging systems may include one or more electronic devices (e.g., a head-mounted display device, a smart watch, a smart phone, etc.) that are worn by and/or interacted with by a user. In at least one embodiment, electronic devices of the energy-exchanging systems may include electrodes that abut or are placed near body portions of the user to conduct body-bound signals through the user's body. Such body-bound signals may be utilized by the energy-exchanging systems to transmit and receive energy through the user's body.

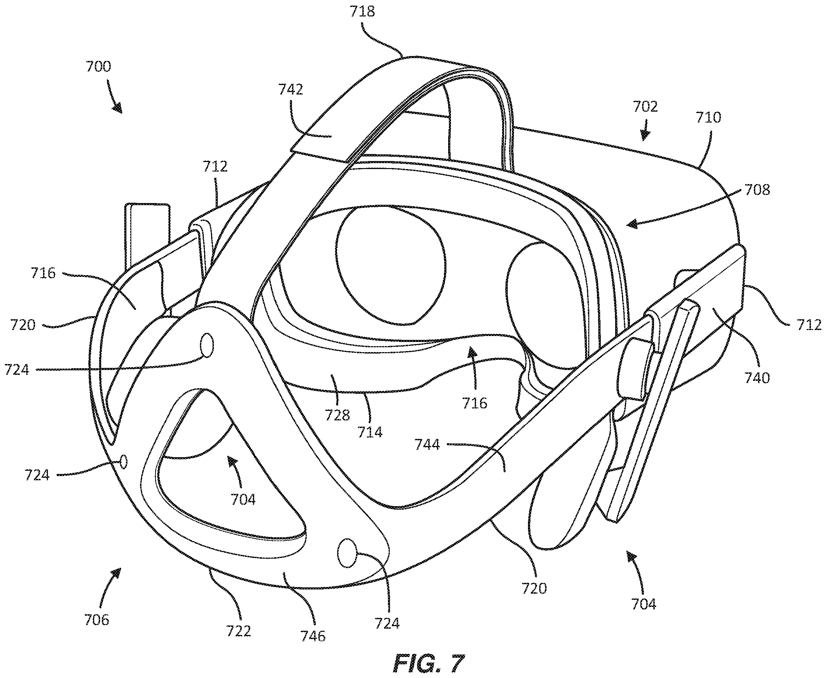

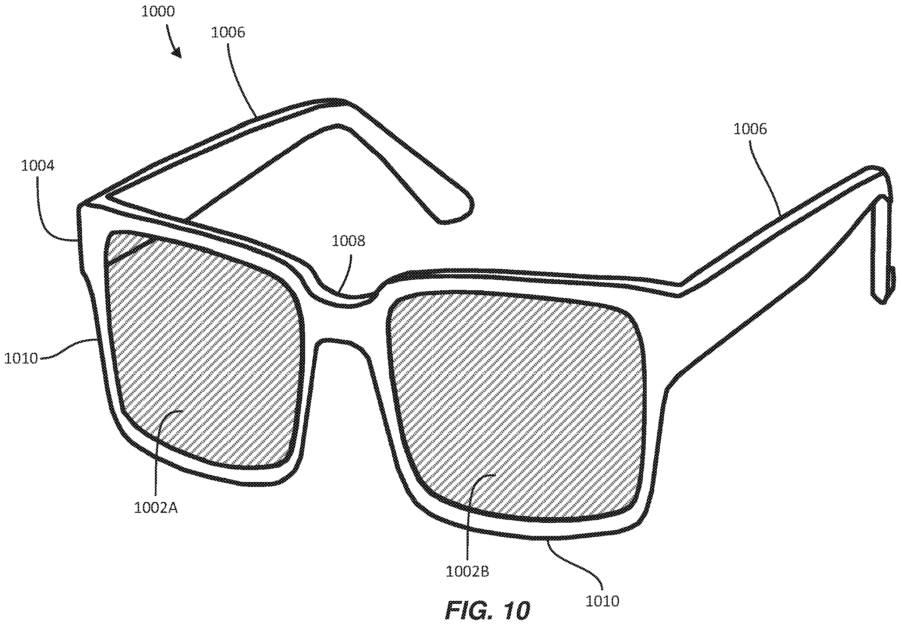

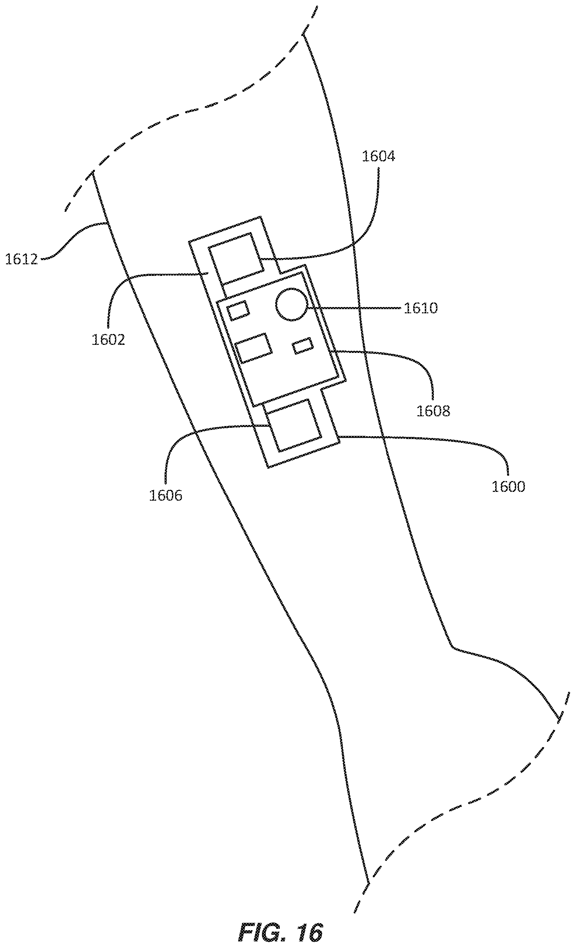

FIG. 1 illustrates an exemplary galvanically coupled energy-exchanging system 100. As shown in this figure, energy-exchanging system 100 may include an energy-harvesting device 102 galvanically coupled to an energy-supplying device 106 via the body of a user 104. In some embodiments, energy-harvesting device 102 or energy-supplying device 106 may be a head-mounted device (e.g., head-mounted display system 700 in FIG. 7 or head-mounted display device 1000 in FIG. 10), a biomedical or health-monitoring device, an epidermal electronic device (e.g., epidermal electronic device 1600 in FIG. 16), and/or any other wearable electronic device. Energy-supplying device 106 may include an energy source 120 (e.g., an Alternating Current (AC) power source, a Direct Current (DC) power source, a battery, etc.) and a transmitting subsystem 128 for applying body-bound signals to the body of user 104. Energy-harvesting device 102 may include an electronic component 108, a rectifying subsystem 118 for converting AC power to DC power for use by electronic component 108, and a receiving subsystem 116 for receiving body-bound signals that have been transmitted through the body of user 104. In some examples, transmitting subsystem 128 may produce electromagnetic waves that are applied to at least a portion of the body of user 104 and that are subsequently received from the body of user 104 by receiving subsystem 116.

As shown in FIG. 1, energy-harvesting device 102 may include a human-body coupler 110 that galvanically couples energy-harvesting device 102 to the body of user 104. As shown, human-body coupler 110 may include two or more electrodes, such as electrode 112 and electrode 114, configured to conduct a body-bound signal from the body of user 104. Similarly, energy-supplying device 106 may include a human-body coupler 122 that galvanically couples energy-supplying device 106 to the body of user 104. As shown, human-body coupler 122 may include two or more electrodes, such as electrode 124 and electrode 126, configured to apply a body-bound signal to the body of user 104.

In some examples, electrodes 124 and 126 may be disposed abutting a portion of the body of user 104 such that electrodes 124 and 126 are in relatively close proximity to each other without directly contacting each other. An electromagnetic signal may be differentially applied between electrodes 124 and 126 by transmitting subsystem 128, generating an electric current between electrodes 124 and 126. A major portion of the electric current may be distributed between electrodes 124 and 126 and a smaller secondary electric current (i.e., a body-bound signal) may propagate through the body of user 104. The body-bound signal may be transmitted through conductive tissues of the body along any suitable pathway and/or combination of pathways in the body. The applied body-bound signal may be received by electrodes 112 and 114 after passing through the body of user 104. According to some examples, electrodes 112 and 114 may abut a portion of the body of user 104 that is disposed apart from electrodes 124 and 126. Electrodes 112 and 114 may be positioned in relatively close proximity to each other without directly contacting each other. In at least one example, electrodes 112 and 114 may be separated from one another by a dielectric material. The secondary current induced by electrodes 124 and 126 may pass through at least a portion of the body as described above and may be received at electrodes 112 and 114, resulting in a differential signal applied between electrodes 112 and 114 that is received by receiving subsystem 116.

FIG. 2 illustrates an exemplary energy-exchanging system 200. As shown in FIG. 2, energy-exchanging system 200 may include an energy-harvesting device 202 capacitively coupled to an energy-supplying device 206 via the body of a user 204. In some embodiments, energy-harvesting device 202. or energy-supplying device 206 may be a head-mounted device (e.g., head-mounted display system 700 in FIG. 7 or head-mounted display device 1 000 in FIG. 10), a biomedical or health-monitoring device, an epidermal electronic device (e.g., epidermal electronic device 1600 in FIG. 16), and/or any other wearable electronic device. Energy-supplying device 206 may include an energy source 220 (e.g., an AC power source, a DC power source, a battery, etc.) and a transmitting subsystem 228 for applying body-bound signals to the body of user 204. Energy-harvesting device 202 may include an electronic component 208, a rectifying subsystem 218 for converting AC power to DC power for use by electronic component 208, and a receiving subsystem 216 for receiving body-bound signals that have been transmitted through the body of user 204. In some examples, transmitting subsystem 228 may produce electromagnetic waves that are applied to at least a portion of the body of user 204 and that are subsequently received from the body of user 204 by receiving subsystem 216.

As shown in FIG. 2, energy-harvesting device 202 may include a human-body coupler 210 that capacitively couples energy-harvesting device 202 to the body of user 204. As shown, human-body coupler 210 may include two or more plates or electrodes, such as electrode 212 and electrode 214, configured to conduct a body-bound signal from the body of user 204. Similarly, energy-supplying device 206 may include a human-body coupler 222 that capacitively couples energy-supplying device 206 to the body of user 204. As shown, human-body coupler 222 may include two or more plates or electrodes, such as electrode 224 and electrode 226, configured to apply a body-bound signal to the body of user 204.

In some embodiments, human-body coupler 210 may be capacitively coupled to the body of user 204 and to a region surrounding the user, represented by environment 203, via one or more receiving electrodes, such as electrodes 212 and 214, and human-body coupler 222 may be capacitively coupled to the body of user 204 and to a region surrounding the user, represented by environment 203, via one or more transmitting electrodes, such as electrodes 224 and 226. As shown in FIG. 2, one of the transmitting electrodes, such as electrode 224, may point towards and abut a portion of the body of user 204, and another transmitting electrode, such as electrode 226, may point away from the body of user 204 and be exposed to environment 203. Electrodes 224 and 226 may be in relatively close proximity to each other and may be electrically isolated from one another by a dielectric material. For example, electrode 224 and electrode 226 may be layered so as to overlap each other with a dielectric layer disposed between electrode 224 and electrode 226. Additionally, electrode 226, which is exposed to environment 203, may not contact the body of user 204 such that electrodes 224 and 226 are each disposed at different distances from the body, resulting in electrodes 224 and 226 each having a different capacitive coupling to the body when an electromagnetic signal is applied between electrodes 224 and 226 by transmitting subsystem 228. A corresponding body-bound signal may be applied to the body of user 204 by electrodes 224 and 226.

In some embodiments, at least one of the receiving electrodes, such as electrode 212, may abut a portion of the body of user 204, and another receiving electrode, such as electrode 214, may be exposed to environment 203 as illustrated in FIG. 2. Electrodes 212 and 214 may be in relatively close proximity to each other and may be separated from one another by a dielectric material. For example, electrode 212 and electrode 214 may be layered so as to overlap each other with a dielectric layer disposed between electrode 212 and electrode 214. Additionally, electrode 214, which is exposed to environment 203, may not contact the body of user 204. Accordingly, electrodes 212 and 214 may each be disposed at different distances from the body of user 204 such that differential signals are generated between electrodes 212 and 214 in response to the body-bound signal applied via electrodes 224 and 226 passing through the body of user 204. The body of user 204 may, for example, act as a conductor conveying the body-bound signals from transmitting subsystem 228 via electrodes 224 and 226 to receiving subsystem 216 via electrodes 212 and 214. A return signal path may be generated between electrode 214 and electrode 226, which are exposed to environment 203, through ground 201. Therefore, an electric field around the body of user 204 may be utilized to capacitively transmit body-bound signals through the body of user 204 from transmitting subsystem 228 to receiving subsystem 216.

In some embodiments, signals applied to the body of a user by one or more electrodes (e.g., electrodes 124 and 126 shown in FIG.1 or electrodes 224 and 226 shown in FIG. 2) may be selected such that body-bound signals do not negatively impact a user's health while allowing for sufficient propagation of the body-bound signals through the user's body. For example, a transmitting subsystem (e.g., transmitting subsystem 128, transmitting subsystem 228, etc.), may, for example, supply up to+20 decibel-milliwatts (dBm) of power to electrodes at frequencies between about 1 kilohertz (kHz) and 150 megahertz (MHz).

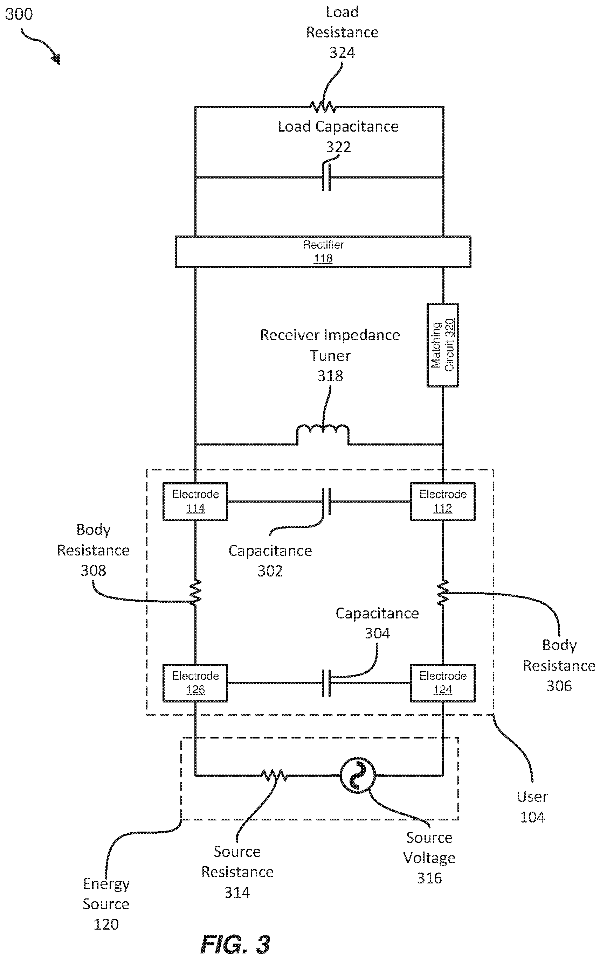

FIG. 3 illustrates an exemplary approximated model 300 of the interactions of galvanically coupled energy-exchanging system 100 and user 104 illustrated in FIG. 1. As illustrated in FIG. 3, a capacitance 302 may represent a capacitance between electrode 112 and electrode 114, which are shown in contact with the body of user 104. Additionally, a capacitance 304 may represent a capacitance between electrode 124 and electrode 126, which are shown in contact with the body of user 104. In this example, a body resistance 306 may represent a resistance of the body of user 104 along one or more paths between electrode 112 and electrode 124, and a body resistance 308 may represent a resistance of the body of user 104 along one or more paths between electrode 114 and electrode 126. As shown in FIG. 3, energy source 120 may be modeled as a source resistance 314 and an alternating source voltage 316. In this example, receiving subsystem 116 may be modeled as a receiver impedance tuner 318 and a matching (or tuning) circuit 320, and electronic component 108 may be modeled as a load capacitance 322 and a load resistance 324.

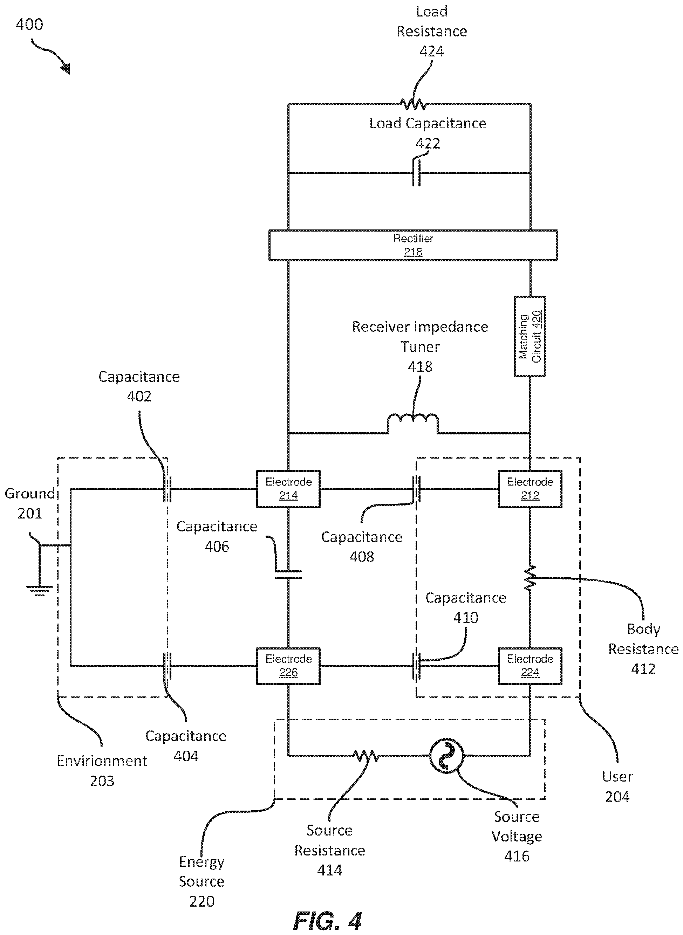

FIG. 4 illustrates an exemplary approximated model 400 of the interactions of capacitively coupled energy-exchanging system 200, user 204, environment 203, and ground 201 illustrated in FIG. 2. As illustrated in FIG. 4, a capacitance 402 may represent a capacitance between electrode 214 and ground 201, a capacitance 404 may represent a capacitance between electrode 226 and ground 201, and a capacitance 406 may represent a capacitance between electrode 214 and electrode 226. Additionally, a capacitance 408 may represent a capacitance between electrode 214 and electrode 212, which is shown in contact with the body of user 204, and a capacitance 410 may represent a capacitance between electrode 226 and electrode 224, which is shown in contact with the body of user 204. In this example, the body of user 204 is modeled by body resistance 412. As shown in FIG. 4, energy source 220 may be modeled as a source resistance 414 and an alternating source voltage 416. In this example, receiving subsystem 216 may be modeled as a receiver impedance tuner 418 and a matching (or tuning) circuit 420, and electronic component 208 may be modeled as a load capacitance 422 and a load resistance 424.

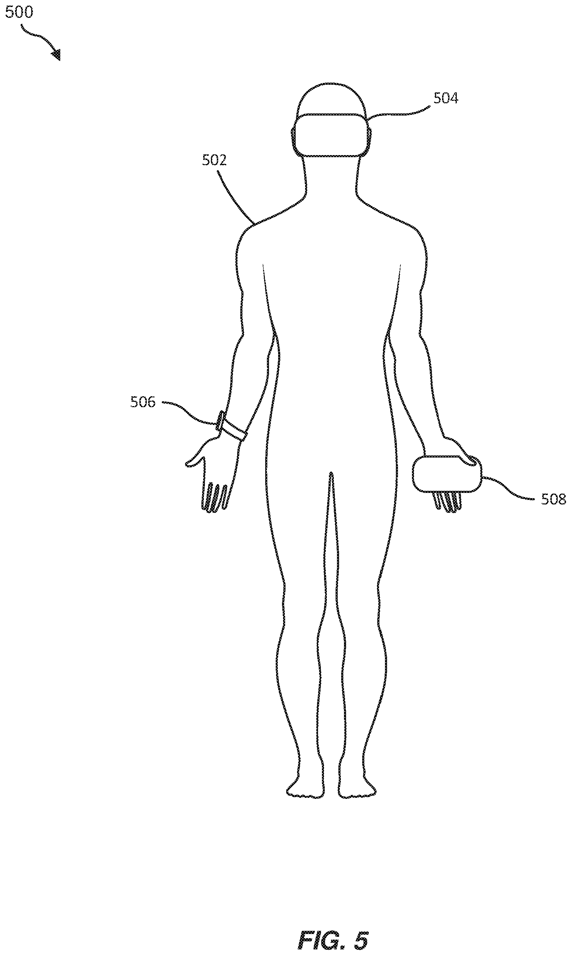

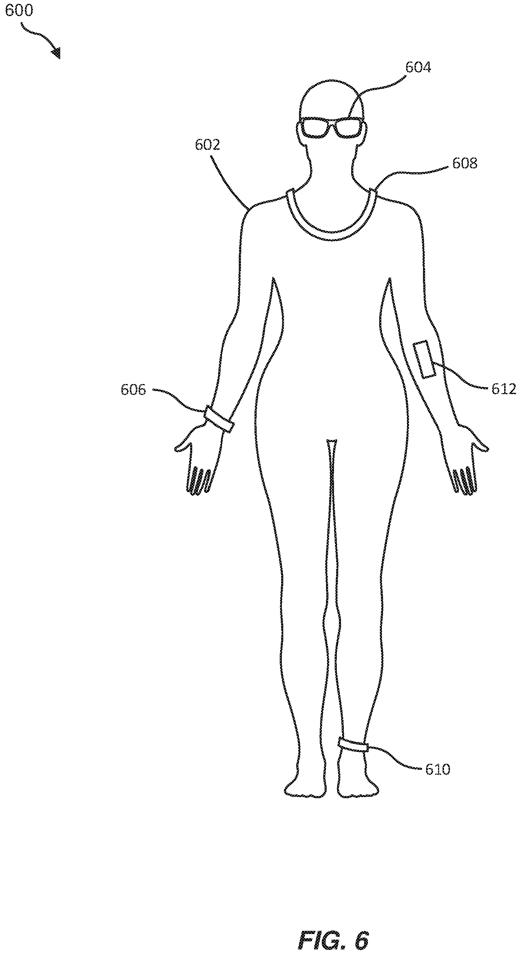

Example energy-exchanging systems 100 and 200 in FIGS. 1 and 2 may be implemented in a variety of ways. For example, all or a portion of example energy-exchanging systems 100 and 200 may represent portions of example systems 500 and 600 shown in FIGS. 5 and 6. As shown in FIG. 5, energy-exchanging system 500 may include a user 502 and various energy-harvesting and energy-supplying devices that are worn or held by user 502. For example, FIG. 5 illustrates a head-mounted display system 504, such as head-mounted display system 700 illustrated in FIGS. 7-9, worn on the head of user 502, a smart watch 506 worn on a wrist of user 502, and a smart phone 508 held in a hand of user 502. In some embodiments, smart watch 506 and/or smart phone 508 may be energy-supplying devices and head-mounted display system 504 may be an energy-harvesting device. In these embodiments, smart watch 506 and/or smart phone 508 may include an energy source (e.g., a battery) and may galvanically and/or capacitively transmit body-bound signals to head-mounted display system 504, via electrodes of head-mounted display system 504, smart watch 506, and/or smart phone 508. Alternatively, one or more of head-mounted display system 504, smart watch 506, and smart phone 508 may include an energy source (e.g., a battery) and may galvanically and/or capacitively transmit body-bound signals to one or more of head-mounted display system 504, smart watch 506, and smart phone 508.

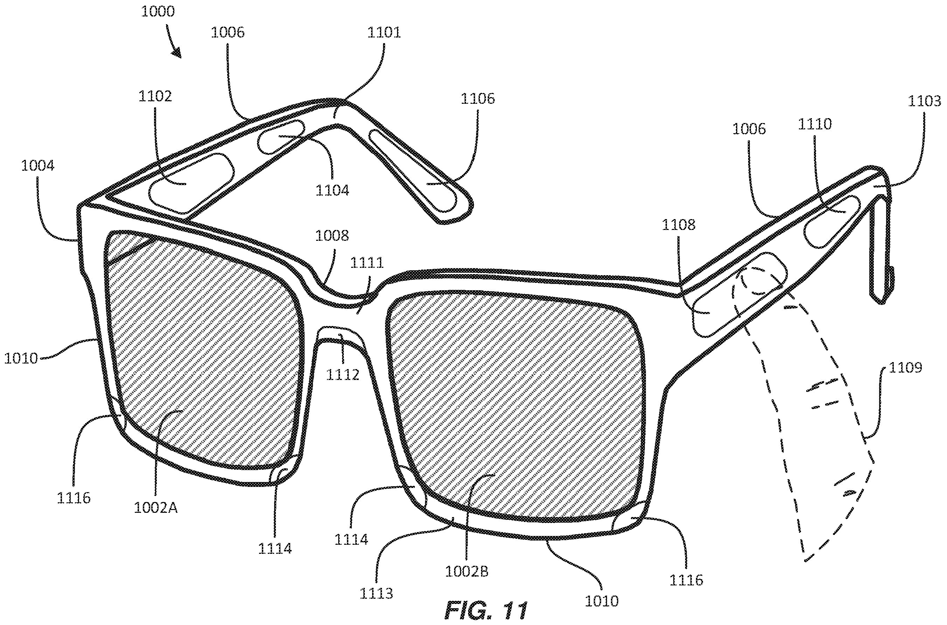

As shown in FIG. 6, energy-exchanging system 600 may include a user 602 and various energy-harvesting and energy-supplying devices that are worn or held by user 602. For example, FIG. 6 illustrates a head-mounted display device 604, such as head-mounted display device 1000 illustrated in FIGS. 10 and 11, worn on the head of user 602, an electronic device 606 worn on a wrist of user 602, an electronic device 608 worn about neck region of user 602, an electronic device 610 worn on an ankle of user 602, and a flexible electronic device 612 (e.g., epidermal electronic device 1600 in FIG. 16) printed or worn on a forearm of user 602. In some embodiments, electronic device 606, electronic device 608, electronic device 610, and/or flexible electronic device 612 may be energy-supplying devices and head-mounted display system 604 may be an energy-harvesting device. In these embodiments, electronic device 606, electronic device 608, electronic device 610, and/or flexible electronic device 612 may include an energy source (e.g., a battery) and may galvanically and/or capacitively transmit body-bound signals to head-mounted display device 604 via electrodes of head-mounted display device 604, electronic device 606, electronic device 608, electronic device 610, and/or flexible electronic device 612. Alternatively, one or more of head-mounted display device 604, electronic device 606, electronic device 608, electronic device 610, and/or flexible electronic device 612 may include an energy source (e.g., a battery) and may galvanically and/or capacitively transmit body-bound signals to one or more of head-mounted display device 604, electronic device 606, electronic device 608, electronic device 610, and/or flexible electronic device 612.

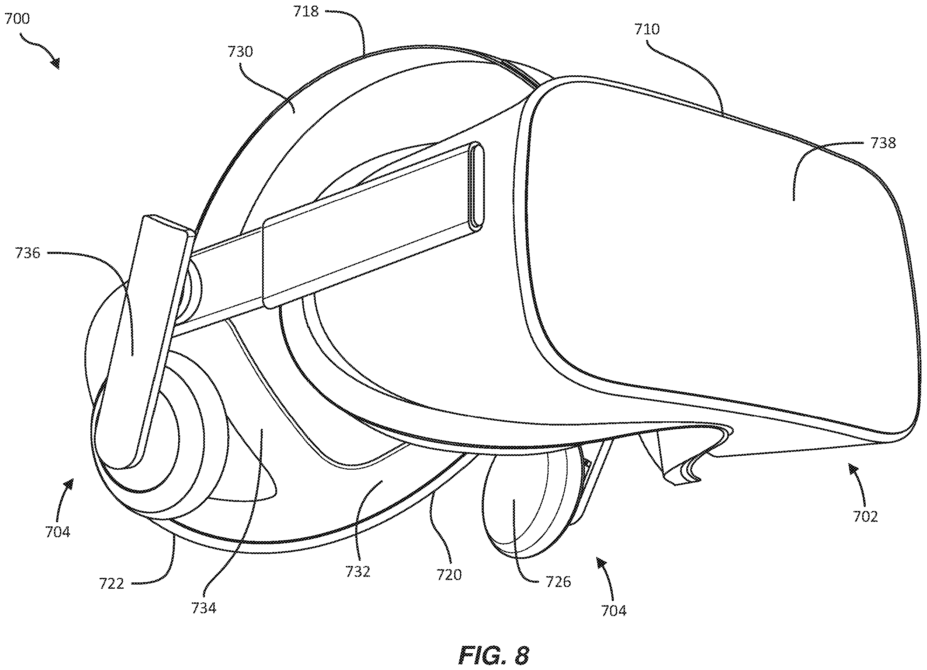

FIGS. 7 and 8 are perspective views of a head-mounted display system 700 in accordance with some embodiments. Head-mounted display system 700 includes a head-mounted display device 702 (e.g., a head-mounted display), audio subsystems 704, a strap assembly 706, and a facial-interface subsystem 708. In some embodiments, the term "head-mounted display" may refer to any type or form of display device or system that is worn on or about a user's head and displays visual content to a user. Head-mounted displays may display content in any suitable manner, including via a screen (e.g., an LCD or LED screen), a projector, a cathode ray tube, an optical mixer, etc. Head-mounted displays may display content in one or more of various media formats. For example, a head-mounted display may display video, photos, and/or computer-generated imagery (CGI).

Head-mounted displays may provide diverse and distinctive user experiences. Some head-mounted displays may provide virtual-reality experiences (i.e., they may display computer-generated or pre-recorded content), while other head-mounted displays may provide real-world experiences (i.e., they may display live imagery from the physical world). Head-mounted displays may also provide any mixture of live and virtual content. For example, virtual content may be projected onto the physical world (e.g., via optical or video see-through), which may result in augmented reality or mixed reality experiences.

In some embodiments, head-mounted display device 702 may include an outer housing 710 that may surround, contain, and protect various display, optical, and other electronic components of head-mounted display device 702. In some embodiments, an electronic component may be any electronic component that may need or require, for proper operation, electrical power and/or a physical electrical pathway to the electronic components of a head-mounted display. Examples of electronic components may include, without limitation, sensors, output devices (e.g., lights, display devices, audio devices, haptic devices, etc.), wireless communication devices (e.g., antennae), and electrical signal or power transfer mediums (e.g., wires or cables). Examples of sensors that may be included in head-mounted display device 702 may include, without limitation, biomedical or health-monitoring sensors, gyroscopic sensors, accelerometers, altimeters, global positioning system devices, light sensors, audio sensors, power sensors, and/or any other suitable sensor. Outer housing 710 may be attached to strap assembly 706 by interfaces 712. Facial-interface subsystem 708 may be configured to comfortably rest against a region of a user's face, including a region surrounding the user's eyes, when head-mounted display system 700 is worn by the user. In these embodiments, facial-interface subsystem 708 may include a facial-interface cushion 714. Facial-interface cushion 714 may surround a viewing region 716 that includes the user's field of vision while the user is wearing head-mounted display system 700.

In some embodiments, strap assembly 706 may be used to mount head-mounted display device 702 on a user's head. As shown in FIG. 7, strap assembly 706 may include an upper strap 718 and lower straps 720. Lower straps 720 may each be coupled to one of strap interfaces 712, which are shown coupled to head-mounted display device 702. Strap assembly 706 may adjustably conform to the top and/or sides of a user's head when the user is wearing head-mounted display device 702. In some embodiments, strap assembly 706 may include a back piece 722 coupled with upper strap 718 and lower straps 720 to rest against the back of the user's head (e.g., around the user's occipital lobe).

Strap assembly 706 may include various electronic components that may require power. As shown in FIG. 7, strap assembly 706 may include motion-tracking lights 724 integrated into back piece 722 and audio subsystems 704 coupled to lower straps 720. In some embodiments, motion-tracking lights 724 may be light-emitting-diode markers that are used by an external motion-tracking system to track the position and/or motion of head-mounted display system 700.

Electrodes made of various conductive elements for transmitting and receiving power via a user's body, such as electrodes 112 and 114 in FIG. 1 or electrodes 212 and 214 in FIG. 2, may be incorporated into head-mounted display system 700. In some embodiments, these conductive elements may receive power through a user's body from a remote energy-supplying device. Conductive elements may be incorporated into any suitable medial or lateral surface of head-mounted display system 700. The term "medial surface" may refer to any surface of a wearable device that faces or points towards a user's body, and the term "lateral surface" may refer to any surface of a wearable device that faces a user's environment and/or face's away from the user's body. In some examples, the medial surfaces of head-mounted display system 700 may include one or more conductive elements positioned to rest against or near a user's head, face, or ears. For example, conductive elements may be incorporated into some or all of medial surfaces 726 of audio subsystems 704, a medial surface 728 of facial-interface subsystem 708, a medial surface 730 of upper strap 718, medial surfaces 732 of lower straps 720, and/or a medial surface 734 of back piece 722. In some examples, the lateral surfaces of head-mounted display system 700 may include one or more conductive elements positioned to face away from a user's head. For example, conductive elements may be incorporated into some or all of lateral surfaces 736 of audio subsystems 704, a lateral surface 738 of outer housing 710, lateral surfaces 740 of strap interfaces 712, a lateral surface 742 of upper strap 718, lateral surfaces 744 of lower straps 720, and/or a lateral surface 746 of back piece 722.

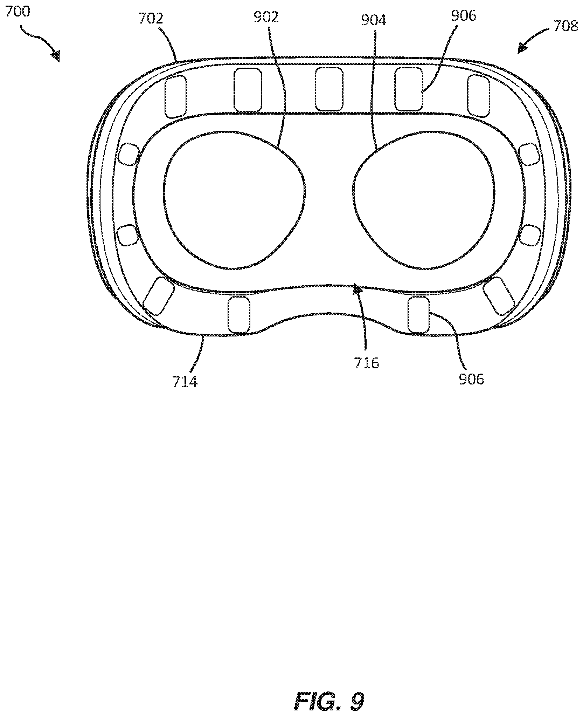

FIG. 9 is a front view of an exemplary head-mounted display device in accordance with some embodiments. Head-mounted display devices may include facial interfaces having electrodes of a human-body coupler as described herein. Such facial interfaces may include any suitable number of electrodes having any suitable size, shape, and configuration. According to at least one embodiment, as shown in FIG. 9, head-mounted display device 702 may include facial-interface subsystem 708 surrounding a viewing region 716, which includes a user's field of vision, allowing the user to look through left-eye lens 902 and right-eye lens 904 of head-mounted display device 702 without interference from outside light while the user is wearing head-mounted display device 702. Images displayed by one or more display screens of head-mounted display device 702 may be visible to a user through left-eye lens 902 and right-eye lens 904.

As illustrated in FIG. 9, facial-interface subsystem 708 may also include a plurality of electrodes 906 that are positioned to abut various regions of a user's face when head-mounted display device 702 is worn by the user. For example, as will be described in greater detail below, electrodes 906 may be positioned to abut portions of the user's nasal, cheek, temple, and/or forehead facial regions. In at least one embodiment, one or more of electrodes 906 may be elongated electrodes having a rectangular or generally rectangular periphery, as shown in FIG. 9. In some examples, electrodes 906 may be disposed in a facial-interface cushion 71 4 of facial-interface subsystem 708 such that surfaces of electrodes 906 are positioned to abut the user's face. Electrodes 906 may be positioned apart from each other such that adjacent electrodes 906 do not contact each other. In some examples, facial-interface cushion 714 may include an insulative material that prevents an electrical current from being conducted between separate electrodes 906 via facial-interface cushion 714.

Electrodes 906 may be galvanically or capacitively coupled to a user when head-mounted display device 702 is worn by the user such that body-bound signals may be received or transmitted from two or more electrodes of another electronic device mounted to a separate portion of the user's body. Electrodes 906 may be configured to receive or transmit body-bound signals when electrodes 906 contact a user's skin and/or when electrodes 906 are in sufficiently close proximity to the user's skin.

FIGS. 10 and 11 are diagrams of a head-mounted display device 1000 according to some embodiments. The depicted embodiment includes a right near-eye display 1002A and a left near-eye display 1002B, which are collectively referred to as near-eye displays 1002. Near-eye displays 1002 may present media to a user. Examples of media presented by near-eye displays 1002 include one or more images, a series of images (e.g., a video), audio, or some combination thereof. Near-eye displays 1002 may be configured to operate as an AR near-eye display, such that a user can see media projected by near-eye displays 1002 and see the real-world environment through near-eye displays 1002. However, in some embodiments, near-eye displays 1002 may be modified to also operate as VR near-eye displays, MR near-eye displays, or some combination thereof. Accordingly, in some embodiments, near-eye displays 1002 may augment views of a physical, real-world environment with computer-generated elements (e.g., images, video, sound, etc.).

As shown in FIG. 10, head-mounted display device 1000 may include a support or frame 1004 that secures near-eye displays 1002 in place on the head of a user, in embodiments in which near-eye displays 1002 includes separate left and right displays. In some embodiments, frame 1004 may be a frame of eye-wear glasses. Frame 1004 may include temples 1006 configured to rest on the top of and/or behind a user's ears, a bridge 1008 configured to rest on the top on the bridge of the user's nose, and rims 1010 sized and configured to rest on or against the user's cheeks. Although not illustrated in FIG. 10, in some embodiments, head-mounted display device 1000 may include nose pads for resting on the bridge of the user's nose.

Conductive elements for transmitting power via a user's body may be incorporated into head-mounted display device 1000 at various locations. FIG. 11 illustrates exemplary placements of conductive elements for head-mounted display device 1000. In this example, a medial surface 1101 of one or both of temples 1006 may include a conductive element 1102 positioned to rest against or near the temple region of a user's face, a conductive element 1104 positioned to rest against or near the region of a user's head above the user's ear, and/or a conductive element 1106 positioned to rest against or near the region of a user's head behind the user's ear. In some examples, a medial surface 1111 of bridge 1008 may include a conductive element 1112 configured to rest on the top on the bridge of the user's nose, and/or a medial surface 1113 of rims 1010 may include conductive elements 1114 and 1116 configured to rest against the user's cheeks. A lateral surface 1103 of one or both of temples 1006 may include a conductive element 1108 positioned near the temple region of a user's face such that a user is able to touch or contact conductive element 1108 with a finger 1109 and/or a conductive element 1110 positioned to rest against or near the top of the user's ear. In embodiments where head-mounted display device 1000 has nose pads, some or all of the nose pads may include conductive elements for transmitting or receiving power via a user's body.

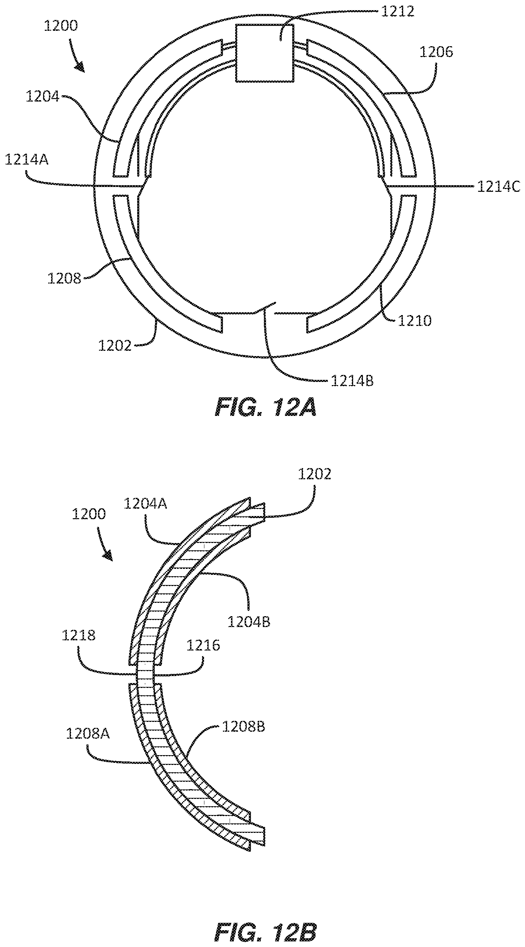

FIGS. 12A and 12B are a front and a cross-sectional view, respectively, of a smart contact lens 1200 (e.g., for correcting a user's vision, displaying images to the user, recording images viewed by the user, etc.) according to some embodiments. As shown by the depicted embodiment, smart contact lens 1200 may include a dielectric substrate 1202 (e.g., a dielectric material such as plastic, glass, etc.), two or more electrodes (e.g., electrodes 1204, 1206, 1208, and/or 1210) for receiving power via a user's body, and circuitry 1212 (e.g., an electronic component, a receiver, a rectifier, and/or other control systems for managing smart contact lens 1200). In some embodiments, electrodes 1204-1210 may be constructed from any conductive material, which may be transparent.

As shown in FIG. 12A, smart contact lens 1200 may include one or more switches 1214 that are configured to dynamically or optionally connect two or more of electrodes 1204, 1206, 1208, and/or 1210 so that the two or more of electrodes 1204, 1206, 1208, and/or 1210 act as a single electrode. For example, switch 1214A may connect electrodes 1204 and 1208 such that they act as a single electrode, switch 1214B may connect electrodes 1208 and 1210 such that they act as a single electrode, and switch 1214C may connect electrodes 1206 and 1210 such that they act as a single electrode. In at least one embodiment, switches 1214 may connect electrodes 1204, 1206, 1208, and 1210 such that they act as a single electrode. Switches 1214 may be Complementary Metal-Oxide-Semiconductor (CMOS) switches, thin-film switches, and/or any other suitable switch. As shown in FIG. 12B, electrodes 1204, 1206, 1208, and/or 1210 may be coupled to a medial surface 1216 and/or a lateral surface 1218 of smart contact lens 1200. In the illustrated embodiment, medial surface 1216 may include electrodes 1204B and 1208B positioned to rest against or near a user's eye, and/or lateral surface 1218 of smart contact lens 1200 may include electrodes 1204A and 1208A positioned to face away from the user's eye.

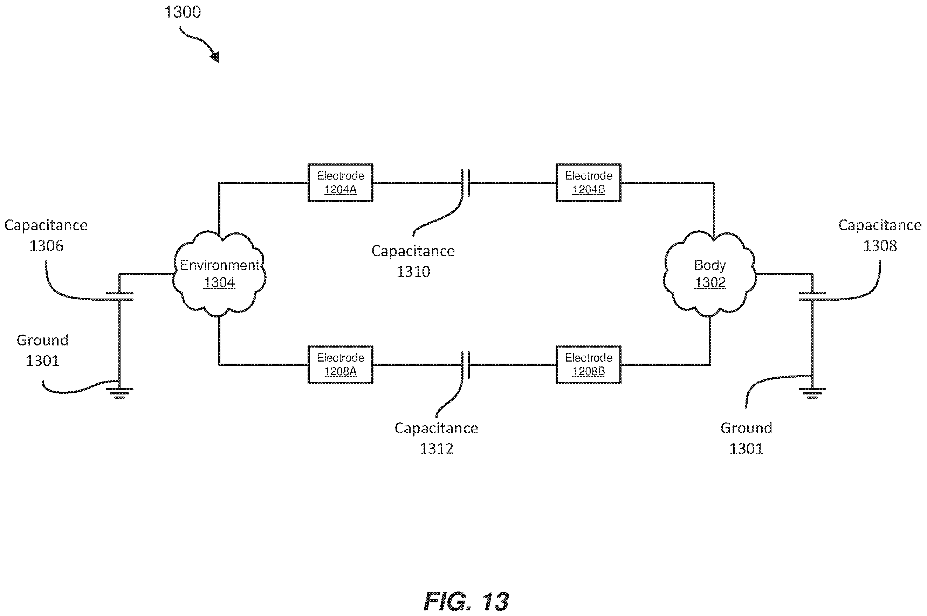

FIG. 13 illustrates an exemplary approximated model 1300 of some of the interactions of smart contact lens 1200 in FIG. 12, a body 1302 of a user, an environment 1304 of the user, and ground 1301. As illustrated in FIG. 13, a capacitance 1306 may represent a capacitance between electrodes 1204A and 1208A and ground 1301, and a capacitance 1308 may represent a capacitance between electrodes 1204B and 1208B and ground 1301. Additionally, a capacitance 1310 may represent a capacitance between electrode 1204A and electrode 1204B, which is in contact with body 1302, and a capacitance 1312 may represent a capacitance between electrode 1208A and electrode 1208B, which is in contact with body 1302.

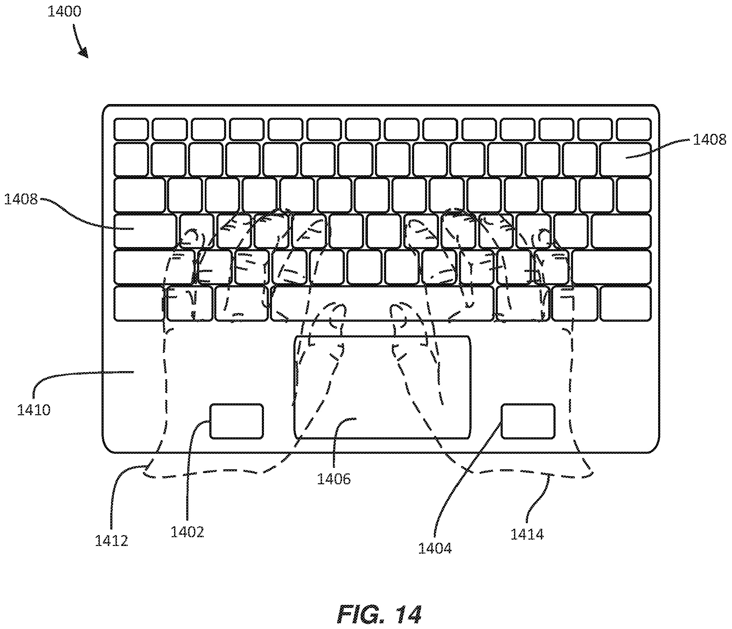

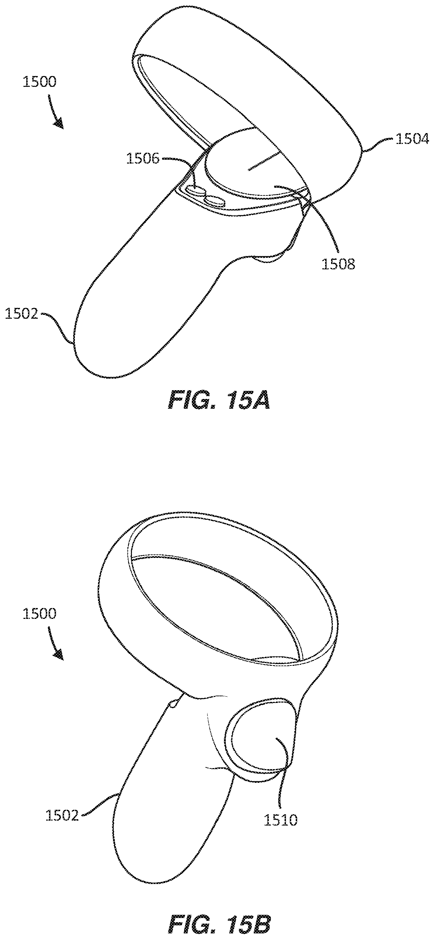

FIGS. 14, 15A, and 15B illustrate various exemplary energy-supplying devices according to some embodiments. FIG. 14 is a top view of a keyboard 1400 that may supply power to a head-mounted energy-harvesting device via a user's body as the user is interacting with keyboard 1400. In some embodiments, keyboard 1400 may be a keyboard of a laptop or a desktop computing device. In some examples, keyboard 1400 may include a power source (e.g., a battery) and/or be connected to an external power source (e.g., a power supply of a desktop computing device). Whenever a user interacts with keyboard 1400, keyboard 1400 may transmit power to a head-mounted energy-harvesting device or other wearable devices worn by a user via electrodes incorporated into keyboard 1400.

Conductive elements for transmitting power via a user's body may be incorporated into keyboard 1400 at various locations. As shown, keyboard 1400 may include a left conductive element 1402, a right conductive element 1404, a touchpad 1406, keys 1408, and a top surface 1410. Left conductive element 1402 may be positioned relative to keys 1408 so that a left hand 1412 of a user will typically rest on left conductive element 1402 when the user interacts with keyboard 1400. Similarly, right conductive element 1404 may be positioned relative to keys 1408 so that a right hand 1414 of the user will typically rest on right conductive element 1404 when the user interacts with keyboard 1400. In addition to or as an alternative to left conductive element 1402 and right conductive element 1404, one or more additional conductive elements may be incorporated into other surfaces of keyboard 1400 with which the user is likely to touch or contact. For example, conductive elements may be incorporated in touchpad 1406, one or more of keys 1408, and/or some or all of top surface 1410.

FIGS. 15A and 15B are perspective views of a hand-held controller 1500 of a head-mounted display system in accordance with various embodiments. In some examples, a head-mounted display system may include two hand-held controllers 1500, with one hand-held controller 1500 for each of a user's right and left hands. Each hand-held controller 1500 may be communicatively coupled to a head-mounted display device. Hand-held controller 1500 may be communicatively coupled to the head-mounted display via any suitable wireless connection.

As shown in FIG. 15, hand-held controller 1500 may include a grip 1502 sized to fit within a user's right or left hand. Hand-held controller 1500 may also include a tracking loop 1504 for tracking a position and orientation of hand-held controller 1500. For example, tracking loop 1504 may include an array of tracking lights, such as LEDs, that are used in conjunction with a sensor (not shown) for motion and positional tracking purposes to provide 360-degree motion control while using hand-held controller 1500. Hand-held controller 1500 may additionally include one or more input features (e.g., button, trigger, joystick, touchpad, etc.) for receiving input from a user. For example, hand-held controller 1500 may include buttons 1506 that may be depressed by the user's thumb to activate a corresponding switch and/or sensor. Additionally, hand-held controller 1500 may include a touchpad 1508 that includes, for example, sensors (e.g., capacitive sensors, conductive sensors, resistive sensors, etc.) that detect the position and/or directional movement of a user's thumb. In some embodiments, touchpad 1508 may be depressed by a user at one or more locations in the same manner as a button to provide additional input by activating one or more switches and/or sensors. Hand-held controller 1500 may also include a trigger 1510, which is a button that may be depressed by a user's finger (e.g., index finger) to activate a switch and/or sensor, on a side of hand-held controller 1500 opposite buttons 1506 and touchpad 1508. Additionally or alternatively, hand-held controller 1500 may include one or more other buttons, triggers, touchpads, and/or any other suitable input features, such as, for example, an analog stick (e.g., thumbstick) and/or a control pad (e.g., directional pad), without limitation. One or more conductive elements for transmitting power via a user's body may be utilized in any suitable portion of hand-held controller 1500, without limitation, including, for example, one or more portions of grip 1502, tracking loop 1504, one or more of buttons 1506, touchpad 1508, and/or trigger 1510.

FIG. 16 is a front view of an epidermal electronic device 1600 according to some embodiments. In the depicted embodiment, epidermal electronic device 1600 includes a flexible substrate 1602, electrodes 1604 and 1606 for receiving power via a user's body, and circuitry 1608 (e.g., an electronic component 1610, a receiver, a rectifier, and/or other control systems for managing epidermal electronic device 1600). In some embodiments, epidermal electronic device 1600 may represent a biomedical or health-monitoring device. Additionally or alternatively, epidermal electronic device 1600 may represent electronic circuits that have been printed and/or tattooed directly on a user's skin. As shown in FIG. 16, epidermal electronic device 1600 may be printed or affixed to a user's forearm 1612. However, in other embodiments, epidermal electronic device 1600 may be printed or affixed to any other portion of a user's body (e.g., the user's head).

FIG. 17 is a flow diagram of an exemplary computer-implemented method 1700 for harvesting energy via wearers' bodies. The steps shown in FIG. 17 may be performed by any suitable computer-executable code and/or computing system, including the devices illustrated in FIGS. 1, 2, 5-12B, and 14-16. In one example, each of the steps shown in FIG. 17 may represent an algorithm whose structure includes and/or is represented by multiple sub-steps, examples of which will be provided in greater detail below.

As illustrated in FIG. 17, at step 1710 one or more of the systems described herein may transmit, from an energy-supplying device to a head-mounted energy-harvesting device, an artificial body-bound signal through a user's body by applying the artificial body-bound signal to a human-body coupler of the energy-supplying device. For example, transmitting subsystem 128 of energy-supplying device 106 in FIG. 1 may galvanically transmit an artificial body-bound signal to energy-harvesting device 102 through the body of user 104 by applying the artificial body-bound signal to human-body coupler 122. In another example, transmitting subsystem 228 of energy-supplying device 206 in FIG. 2 may capacitively transmit an artificial body-bound signal to energy-harvesting device 202 through the body of user 204 by applying the artificial body-bound signal to human-body coupler 222.

The systems described herein may perform step 1710 in a variety of ways. In general, a transmitting subsystem of an energy-supplying device may transmit an artificial body-bound signal through a user's body by converting a DC voltage to an oscillating signal (e.g., a square-wave signal) and applying the oscillating signal across two electrically isolated electrodes of a human-body coupler to induce a current or an electric field within the user's body. In some examples, a transmitting subsystem of an energy-supplying device may transmit an artificial body-bound signal through a user's body by applying an oscillating or alternating voltage (i.e., an electric potential difference) across two electrodes of a human-body coupler. The transmitting subsystem may select a suitable frequency for the oscillating or alternating voltage that generates body-bound signals that are able to travel through a user's body with low transmission loss. For example, the transmitting subsystem may select a frequency between about 1 kHz and 150 MHz for the oscillating or alternating voltage. In other examples, the transmitting subsystem may select a frequency between about 1 MHz and 100 MHz for the oscillating or alternating voltage.

As illustrated in FIG. 17, at step 1720 one or more of the systems described herein may receive, through a human-body coupler of a head-mounted energy-harvesting device, an artificial body-bound signal from a user's body. For example, receiving subsystem 116 of energy-harvesting device 102 in FIG. 1 may galvanically receive an artificial body-bound signal sent from energy-supplying device 106 through the body of user 104 by conducting the artificial body-bound signal from the body of user 104 via electrodes 112 and 114 of human-body coupler 122. In another example, receiving subsystem 216 of energy-harvesting device 202 in FIG. 2 may galvanically receive an artificial body-bound signal sent from energy-supplying device 206 through the body of user 204 by conducting the artificial body-bound signal from the body of user 204 via electrodes 212 and 214 of human-body coupler 222.

The systems described herein may perform step 1720 in a variety of ways. In general, a receiving subsystem of an energy-harvesting device may receive an artificial body-bound signal through a user's body by conducting an oscillating current generated by an oscillating or alternating voltage found across two electrically isolated electrodes of a human-body coupler. This oscillating or alternating voltage may be caused by an artificial body-bound signal. In some examples, a receiving subsystem of an energy-harvesting device may include a resonator or resonant circuit that is configured to resonate at a frequency of an artificial body-bound signal sent through a user's body. In these examples, the receiving subsystem may use the resonator to receive an oscillating or alternating signal found across two electrically isolated electrodes of a human-body coupler.

As illustrated in FIG. 17, at step 1730 one or more of the systems described herein may convert, at the head-mounted energy-harvesting device, the artificial body-bound signal into a direct current for use by an electronic component. For example, rectifying subsystem 118 of energy-harvesting device 102 in FIG. 1 may convert an artificial body-bound signal sent from energy-supplying device 106 through the body of user 104 into a direct current for use by electronic component 108. In another example, rectifying subsystem 218 of energy-harvesting device 202 in FIG. 2 may convert an artificial body-bound signal sent from energy-supplying device 206 through the body of user 204 into a direct voltage or current for use by electronic component 208. The systems described herein may use any suitable rectifying circuitry or method to convert an artificial body-bound signal into a direct voltage or current.

As illustrated in FIG. 17, at step 1740 one or more of the systems described herein may apply, at the head-mounted energy-harvesting device, the direct current to the electronic component. For example, rectifying subsystem 118 of energy-harvesting device 102 in FIG. 1 may provide a direct current to electronic component 108. In another example, rectifying subsystem 218 of energy-harvesting device 202 in FIG. 2 may provide a direct current to electronic component 208.

As explained above, embodiments of the instant disclosure may enable a head-mounted device, such as a head-mounted display or a smart contact lens, to receive energy through a wearer's body from other remote energy-supplying devices (e.g., smart phones, smart watches, auxiliary battery packs, and/or laptop or desktop computers) worn or contacted by the wearer. By using a wearer's body as a low-loss energy transfer medium, embodiments of the instant disclosure may enable wireless head-mounted devices to efficiently harvest energy. Moreover, by enabling head-mounted devices to harvest energy from a wearer's body, embodiments of the instant disclosure may enable head-mounted devices to be designed with smaller batteries or designed to consume more power than existing head-mounted devices without the need for users to consciously charge their head-mounted devices at all or as often.

As detailed above, the computing devices and systems described and/or illustrated herein broadly represent any type or form of computing device or system capable of executing computer-readable instructions, such as those contained within the modules described herein. In their most basic configuration, these computing device(s) may each include at least one memory device and at least one physical processor.

In some examples, the term "memory device" generally refers to any type or form of volatile or non-volatile storage device or medium capable of storing data and/or computer-readable instructions. In one example, a memory device may store, load, and/or maintain one or more of the modules described herein. Examples of memory devices include, without limitation, Random Access Memory (RAM), Read Only Memory (ROM), flash memory, Hard Disk Drives (HDDs), Solid-State Drives (SSDs), optical disk drives, caches, variations or combinations of one or more of the same, or any other suitable storage memory.

In some examples, the term "physical processor" generally refers to any type or form of hardware-implemented processing unit capable of interpreting and/or executing computer-readable instructions. In one example, a physical processor may access and/or modify one or more modules stored in the above-described memory device. Examples of physical processors include, without limitation, microprocessors, microcontrollers, Central Processing Units (CPUs), Field-Programmable Gate Arrays (FPGAs) that implement softcore processors, Application-Specific Integrated Circuits (ASICs), portions of one or more of the same, variations or combinations of one or more of the same, or any other suitable physical processor.

Although illustrated as separate elements, the modules described and/or illustrated herein may represent portions of a single module or application. In addition, in certain embodiments one or more of these modules may represent one or more software applications or programs that, when executed by a computing device, may cause the computing device to perform one or more tasks. For example, one or more of the modules described and/or illustrated herein may represent modules stored and configured to run on one or more of the computing devices or systems described and/or illustrated herein. One or more of these modules may also represent all or portions of one or more special-purpose computers configured to perform one or more tasks.

In addition, one or more of the subsystems or modules described herein may transform data, physical devices, and/or representations of physical devices from one form to another. For example, one or more of the subsystems or modules recited herein may receive an artificial body-bound signal from a human body, transform the artificial body-bound signal into a DC voltage, output a result of the transformation to an electronic component that is operable using the DC voltage, use the result of the transformation to operate the electronic component, and/or store the result of the transformation to operate the electronic component at a later time. Additionally or alternatively, one or more of the subsystems or modules recited herein may transform a processor, volatile memory, non-volatile memory, and/or any other portion of a physical computing device from one form to another by executing on the computing device, storing data on the computing device, and/or otherwise interacting with the computing device.

In some embodiments, the term "computer-readable medium" generally refers to any form of device, carrier, or medium capable of storing or carrying computer-readable instructions. Examples of computer-readable media include, without limitation, transmission-type media, such as carrier waves, and non-transitory-type media, such as magnetic-storage media (e.g., hard disk drives, tape drives, and floppy disks), optical-storage media (e.g., Compact Disks (CDs), Digital Video Disks (DVDs), and BLU-RAY disks), electronic-storage media (e.g., solid-state drives and flash media), and other distribution systems.

Embodiments of the instant disclosure may include or be implemented in conjunction with an artificial reality system. Artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured (e.g., real-world) content. The artificial reality content may include video, audio, haptic feedback, or some combination thereof, any of which may be presented in a single channel or in multiple channels (such as stereo video that produces a three-dimensional effect to the viewer). Additionally, in some embodiments, artificial reality may also be associated with applications, products, accessories, services, or some combination thereof, that are used to, e.g., create content in an artificial reality and/or are otherwise used in (e.g., perform activities in) an artificial reality. The artificial reality system that provides the artificial reality content may be implemented on various platforms, including a head-mounted display (HMD) connected to a host computer system, a standalone HMD, a mobile device or computing system, or any other hardware platform capable of providing artificial reality content to one or more viewers.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the scope of the instant disclosure. The embodiments disclosed herein should be considered in all respects illustrative and not restrictive. The protection is defined in the appended claims.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. A head-mounted energy-harvesting device (102) comprising:
an electronic component (108) that is powered using a direct current;
a human-body coupler (110) configured to conduct an artificial body-bound signal from a user's body (104), **characterised in that**:
the human-body coupler comprises a first electrically isolated electrode and a second electrically isolated electrode (112) and a second electrically isolated electrode (114); and
the artificial body-bound signal is transmitted by an energy-supplying device (106) through the user's body, wherein the artificial body-bound signal is transmitted by converting a DC voltage to an oscillating signal and applying the oscillating signal across the two electrically isolated electrodes of the human-body coupler (110) to induce a current or an electric field within the user's body;
a receiving subsystem (116) electrically connected to the human-body coupler and configured to receive the artificial body-bound signal; and
a rectifying subsystem (118) coupled to the receiving subsystem and configured to convert the artificial body-bound signal into the direct current for use by the electronic component.

2. The head-mounted energy-harvesting device of claim 1, wherein:
the human-body coupler is capacitively coupled to the user's body;
the head-mounted energy -harvesting device further comprises:
a medial surface that faces the user's head when the head-mounted energy-harvesting device is worn by the user; and
a lateral surface that faces away from the user's head when the head-mounted energy-harvesting device is worn by the user;
the first electrode is coupled to the medial surface of the head-mounted energy harvesting device such that the first electrode contacts the user's head; and
the second electrode is coupled to the lateral surface of the head-mounted energy harvesting device such that the second electrode contacts air surrounding the user's body.

3. The head-mounted energy-harvesting device of claim 1, wherein:
the human-body coupler is galvanically coupled to the user's body;
the head-mounted energy-harvesting device further comprises a medial surface that faces the user's head when the head-mounted energy-harvesting device is worn by the user; the first electrode is coupled to the medial surface of the head-mounted energy harvesting device such that the first electrode contacts the user's head; and
the second electrode is coupled to the medial surface of the head-mounted energy harvesting device such that the second electrode contacts the user's head

4. The head-mounted energy-harvesting device of claim 1 , wherein the head-mounted energy-harvesting device is a head-mounted display.

5. The head-mounted energy-harvesting device of claim 4, wherein:
the head-mounted display further comprises a facial-interface cushion dimensioned to abut a facial portion of the user; and
the first electrode forms an integral part of the facial-interface cushion.

6. The head-mounted energy-harvesting device of claim 4, wherein:
the head-mounted display further comprises:
a display;
a bridge coupled to the display and dimensioned to rest on the nose of the user; and
a temple coupled to the display and dimensioned to rest on an ear of the user; and
the first electrode forms an integral part of one of:
the bridge; or
the temple.

7. The head-mounted energy-harvesting device of claim 1, wherein the head-mounted energy-harvesting device is a smart contact lens configured to enhance the user's vision.

8. An energy-exchanging system (100) comprising:
an energy-supplying device (106) comprising:
an energy supply (120);
a human-body coupler (122) configured to apply an artificial body-bound signal to a user's body (104), the human-body coupler (122) comprising a first electrically isolated electrode (124) and a second electrically isolated electrode (126); and a transmitting subsystem electrically connected to the energy supply (120) and the human-body coupler (122) and configured to transmit the artificial body-bound signal through the user's body, wherein the artificial body-bound signal is transmitted by converting a DC voltage to an oscillating signal and applying the oscillating signal across the two electrically isolated electrodes of the human-body coupler to induce a current or an electric field within the user's body; and
a head-mounted energy-harvesting device (102) comprising:
an electronic component (108) that is powered using a direct current; and **characterised by**
an additional human-body coupler (110) configured to conduct the artificial body-bound signal from the user's body (104), the human-body coupler comprising a third electrically isolated electrode (112) and a fourth electrically isolated electrode (114);
a receiving subsystem (116) electrically connected to the additional human-body coupler and configured to receive the artificial body-bound signal; and
a rectifying subsystem (118) coupled to the receiving subsystem and configured to convert the artificial body-bound signal into the direct current for use by the electronic component (108)

9. The energy-exchanging system of claim 8, wherein:
the human-body coupler is capacitively coupled to the user's body;
the energy-supplying device further comprises:
a medial surface that faces the user's body when the energy -supplying device is worn by the user; and
a lateral surface that faces away from the user's body when the energy- supplying device is worn by the user;
the first electrode is coupled to the medial surface of the energy-supplying device such that the first electrode contacts the user's body; and
the second electrode is coupled to the lateral surface of the energy- supplying device such that the second electrode contacts air surrounding the user's body

10. The energy-exchanging system of claim 8, wherein:
the human-body coupler is galvanically coupled to the user's body;
the energy- supplying device further comprises a medial surface that faces the user's body when the energy-supplying device is worn by the user;
the first electrode is coupled to the medial surface of the energy-supplying device such that the first electrode contacts the user's body: and the second electrode is coupled to the medial surface of the energy-supplying device such that the first electrode contacts the user's body.

11. The energy-exchanging system of claim 8, wherein the head-mounted energy- harvesting device is a head-mounted display.

12. The energy-exchanging system of claim 11, wherein:
the head-mounted display further comprises a facial-interface cushion dimensioned to abut a facial portion of the user; and
the third electrode forms an integral part of the facial-interface cushion.

13. The energy -exchanging system of claim 11, wherein the energy-supplying device is a smart phone, a smart watch, is an auxiliary battery pack, a laptop computing device or a hand-held controller used by a virtual-reality system or an augmented-reality system.

14. The energy-exchanging system of claim 13, wherein when the energy supplying device is an auxiliary battery pack, the auxiliary battery pack is configured to be worn around at least one of the user's wrist or the user's neck.

15. A computer-implemented method comprising and **characterised by**:
receiving, through a human-body coupler (110) of a head-mounted energy-harvesting device (102), an artificial body-bound signal from a user's body (104), wherein: the artificial body-bound signal is transmitted by an energy-supplying device (106) through the user's body, wherein the artificial body-bound signal is transmitted by converting a DC voltage to an oscillating signal and applying the oscillating signal across two electrically isolated electrodes (124, 126) of the human-body coupler to induce a current or an electric field within the user's body;
the head-mounted energy-harvesting device (102) comprises an electronic component (108) that is powered using a direct current; and
the human-body coupler (110) is configured to conduct the artificial body-bound signal from the user's body and comprises a first electrically isolated electrode (112) and a second electrically isolated electrode (114);
converting, via a receiving subsystem (118) at the head-mounted energy-harvesting device, the artificial body-bound signal into the direct current for use by the electronic component (108); and
applying, at the head-mounted energy-harvesting device, the direct current to the electronic component (108).

## Patentansprüche

1. Eine am Kopf montierte Energiesammelvorrichtung (102), die Folgendes beinhaltet:
eine elektronische Komponente (108), die unter Verwendung eines Gleichstroms betrieben wird;
einen Koppler (110) für den menschlichen Körper, der konfiguriert ist, um ein künstliches körpergebundenes Signal von dem Körper (104) eines Benutzers zu leiten,
**dadurch gekennzeichnet, dass**:
der Koppler für den menschlichen Körper eine erste elektrisch isolierte Elektrode (112) und eine zweite elektrisch isolierte Elektrode (114) beinhaltet; und
das künstliche körpergebundene Signal durch eine Energieversorgungsvorrichtung (106) durch den Körper des Benutzers übertragen wird, wobei das künstliche körpergebundene Signal durch Umwandeln einer Gleichspannung in ein Schwingungssignal und Anlegen des Schwingungssignals zwischen den zwei elektrisch isolierten Elektroden des Kopplers (110) für den menschlichen Körper übertragen wird,
um einen Strom oder ein elektrisches Feld innerhalb des Körpers des Benutzers zu induzieren;
ein empfangendes Teilsystem (116), das mit dem Koppler für den menschlichen Körper elektrisch verbunden ist und konfiguriert ist, um das künstliche körpergebundene Signal zu empfangen; und
ein gleichrichtendes Teilsystem (118), das an das empfangende Teilsystem gekoppelt ist und konfiguriert ist, um das künstliche körpergebundene Signal in den Gleichstrom zur Verwendung durch die elektronische Komponente umzuwandeln.

2. Am Kopf montierte Energiesammeivorrichtung gemäß Anspruch 1, wobei:
der Koppler für den menschlichen Körper kapazitiv an den Körper des Benutzers gekoppelt ist;
wobei die am Kopf montierte Energiesammelvorrichtung ferner Folgendes beinhaltet:
eine innere Fläche, die zu dem Kopf des Benutzers weist, wenn die am Kopf montierte Energiesammeivorrichtung von dem Benutzer getragen wird; und
eine seitliche Fläche, die von dem Kopf des Benutzers weg weist, wenn die am Kopf montierte Energiesammelvorrichtung von dem Benutzer getragen wird;
wobei die erste Elektrode an die innere Fläche der am Kopf montierten Energiesammelvorrichtung gekoppelt ist, sodass die erste Elektrode den Kopf des Benutzers berührt; und
wobei die zweite Elektrode an die seitliche Fläche der am Kopf montierten Energiesammelvorrichtung gekoppelt ist, sodass die zweite Elektrode Luft berührt, die den Körper des Benutzers umgibt.

3. Am Kopf montierte Energiesammelvorrichtung gemäß Anspruch 1, wobei:
der Koppler für den menschlichen Körper galvanisch an den Körper des Benutzers gekoppelt ist;
die am Kopf montierte Energiesammelvorrichtung ferner eine innere Fläche beinhaltet,
die zu dem Kopf des Benutzers weist, wenn die am Kopf montierte Energiesammelvorrichtung von dem Benutzer getragen wird; die erste Elektrode an die innere Fläche der am Kopf montierten Energiesammeivorrichtung gekoppelt ist, sodass die erste Elektrode den Kopf des Benutzers berührt; und
die zweite Elektrode an die innere Fläche der am Kopf montierten Energiesammeivorrichtung gekoppelt ist, sodass die zweite Elektrode den Kopf des Benutzers berührt.

4. Am Kopf montiert Energiesammelvorrichtung gemäß Anspruch 1, wobei die am Kopf montierte Energiesammelvorrichtung eine am Kopf montierte Anzeige ist.

5. Am Kopf montierte Energiesammeivorrichtung gemäß Anspruch 4, wobei:
die am Kopf montierte Anzeige ferner ein Gesichtsschnittstellenpolster beinhaltet, das bemessen ist, um an einem Gesichtsabschnitt des Benutzers anzuliegen; und
die erste Elektrode einen integralen Teil des Gesichtsschnittstellenpolsters bildet.

6. Am Kopf montierte Energiesammelvorrichtung gemäß Anspruch 4, wobei:
die am Kopf montierte Anzeige ferner Folgendes beinhaltet:
eine Anzeige;
einen Steg, der an die Anzeige gekoppelt ist und bemessen ist, um auf der Nase des Benutzers aufzusitzen; und
einen Bügel, der an die Anzeige gekoppelt ist und bemessen ist, um auf einem Ohr des Benutzers aufzusitzen; und
die erste Elektrode einen integralen Teil von einem von Folgenden bildet:
dem Steg; oder
dem Bügel.

7. Am Kopf montierte Energiesammelvorrichtung gemäß Anspruch 1, wobei die am Kopf montierte Energiesammelvorrichtung eine intelligente Kontaktlinse ist, die konfiguriert ist, um die Ansicht des Benutzers zu verbessern.

8. Ein Energieaustauschsystem (100), das Folgendes beinhaltet:
eine Energieversorgungsvorrichtung (106), die Folgendes beinhaltet:
eine Energieversorgung (120);
einen Koppler (122) für den menschlichen Körper, der konfiguriert ist, um ein künstliches körpergebundenes Signal an den Körper (104) eines Benutzers anzulegen,
wobei der Koppler (122) für den menschlichen Körper eine erste elektrisch isolierte Elektrode (124) und eine zweite elektrisch isolierte Elektrode (126) beinhaltet;
und ein übertragendes Teilsystem, das mit der Energieversorgung (120) und dem Koppler (122) für den menschlichen Körper elektrisch verbunden ist und konfiguriert ist, um das künstliche körpergebundene Signal durch den Körper des Benutzers zu übertragen, wobei das künstliche körpergebundene Signal durch Umwandeln einer Gleichspannung in ein Schwingungssignal und Anlegen des Schwingungssignals zwischen den zwei elektrisch isolierten Elektroden des Kopplers für den menschlichen Körper übertragen wird, um einen Strom oder ein elektrisches Feld innerhalb des Körpers des Benutzers zu induzieren; und
eine am Kopf montierte Energiesammelvorrichtung (102), die Folgendes beinhaltet:
eine elektronische Komponente (108), die unter Verwendung eines Gleichstroms betrieben wird; und
**gekennzeichnet durch**:
einen zusätzlichen Koppler (110) für den menschlichen Körper, der konfiguriert ist, um das künstliche körpergebundene Signal von dem Körper (104) des Benutzers zu leiten,
wobei der Koppler für den menschlichen Körper eine dritte elektrisch isolierte Elektrode (112) und eine vierte elektrisch isolierte Elektrode (114) beinhaltet;
ein empfangendes Teilsystem (116), das mit dem zusätzlichen Koppler für den menschlichen Körper elektrisch verbunden ist und konfiguriert ist, um das künstliche körpergebundene Signal zu empfangen; und
ein gleichrichtendes Teilsystem (118), das an das empfangende Teilsystem gekoppelt ist und konfiguriert ist, um das künstliche körpergebundene Signal in den Gleichstrom zur Verwendung durch die elektronische Komponente (108) umzuwandeln.

9. Energieaustauschsystem gemäß Anspruch 8, wobei:
der Koppler für den menschlichen Körper kapazitiv an den Körper des Benutzers gekoppelt ist;
wobei die Energieversorgungsvorrichtung ferner Folgendes beinhaltet:
eine innere Fläche, die zu dem Körper des Benutzers weist, wenn die Energieversorgungsvorrichtung von dem Benutzer getragen wird; und
eine seitliche Fläche, die von dem Körper des Benutzers weg weist, wenn die Energieversorgungsvorrichtung von dem Benutzer getragen wird;
wobei die erste Elektrode an die innere Fläche der Energieversorgungsvorrichtung gekoppelt ist, sodass die erste Elektrode den Körper des Benutzers berührt; und wobei die zweite Elektrode an die seitliche Fläche der Energieversorgungsvorrichtung gekoppelt ist, sodass die zweite Elektrode Luft berührt, die den Körper des Benutzers umgibt.

10. Energieaustauschsystem gemäß Anspruch 8, wobei:
der Koppler für den menschlichen Körper galvanisch an den Körper des Benutzers gekoppelt ist;
die Energieversorgungsvorrichtung ferner eine innere Fläche beinhaltet, die zu dem Körper des Benutzers weist, wenn die Energieversorgungsvorrichtung von dem Benutzer getragen wird;
wobei die erste Elektrode an die innere Fläche der Energieversorgungsvorrichtung gekoppelt ist, sodass die erste Elektrode den Körper des Benutzers berührt: und die zweite Elektrode an die innere Fläche der Energieversorgungsvorrichtung gekoppelt ist,
sodass die zweite Elektrode den Körper des Benutzers berührt.

11. Energieaustauschsystem gemäß Anspruch 8, wobei die am Kopf montierte Energiesammeivorrichtung eine am Kopf montierte Anzeige ist.

12. Energieaustauschsystem gemäß Anspruch 11, wobei:
die am Kopf montierte Anzeige ferner ein Gesichtsschnittstellenpolster beinhaltet, das bemessen ist, um an einem Gesichtsabschnitt des Benutzers anzuliegen; und
die dritte Elektrode einen integralen Teil des Gesichtsschnittstellenpolsters bildet.

13. Energieaustauschsystem gemäß Anspruch 11, wobei die Energieversorgungsvorrichtung ein Smartphone, eine Smartwatch ist, eine Hilfsbatteriepackung, eine Laptoprechenvorrichtung oder eine in der Hand gehaltene Steuereinheit ist, die von einem Virtual-Reality-System oder einem Augmented-Reality-System verwendet wird.

14. Energieaustauschsystem gemäß Anspruch 13, wobei, wenn die Energieversorgungsvorrichtung eine Hilfsbatteriepackung ist, die Hilfsbatteriepackung konfiguriert ist, um um mindestens eines von dem Handgelenk des Benutzers oder dem Hals des Benutzers getragen zu werden.

15. Ein computerimplementiertes Verfahren, das Folgendes beinhaltet und durch Folgendes gekennzeichnet ist:
Empfangen, durch einen Koppler (110) für den menschlichen Körper einer am Kopf montierten Energiesammelvorrichtung (102), eines künstlichen körpergebundenen Signals von dem Körper (104) eines Benutzers, wobei:
das künstliche körpergebundene Signal durch eine Energieversorgungsvorrichtung (106) durch den Körper des Benutzers übertragen wird, wobei das künstliche körpergebundene Signal durch Umwandeln einer Gleichspannung in ein Schwingungssignal und Anlegen des Schwingungssignals zwischen zwei elektrisch isolierten Elektroden (124, 126) des Kopplers für den menschlichen Körper übertragen wird, um einen Strom oder ein elektrisches Feld innerhalb des Körpers des Benutzers zu induzieren;
die am Kopf montierte Energiesammeivorrichtung (102) eine elektronische Komponente (108) beinhaltet, die unter Verwendung eines Gleichstroms betrieben wird; und
der Koppler (110) für den menschlichen Körper konfiguriert ist, um das künstliche körpergebundene Signal von dem Körper des Benutzers zu leiten, und eine erste elektrisch isolierte Elektrode (112) und eine zweite elektrisch isolierte Elektrode (114) beinhaltet,
Umwandeln, über ein empfangendes Teilsystem (118) an der am Kopf montierten Energiesammelvorrichtung, des künstlichen körpergebundenen Signals in den Gleichstrom zur Verwendung durch die elektronische Komponente (108); und
Anlegen, an der am Kopf montierten Energiesammelvorrichtung, des Gleichstroms an die elektronische Komponente (108).

## Revendications

1. Un dispositif de collecte d'énergie monté sur la tête (102) comprenant :
un composant électronique (108) qui est alimenté à l'aide d'un courant continu ;
un coupleur au corps humain (110) configuré pour conduire un signal artificiel lié au corps provenant du corps d'un utilisateur (104), **caractérisé en ce que** :
le coupleur au corps humain comprend une première électrode isolée électriquement (112) et une deuxième électrode isolée électriquement (114) ; et
le signal artificiel lié au corps est émis par un dispositif d'approvisionnement en énergie (106) à travers le corps de l'utilisateur, le signal artificiel lié au corps étant émis par conversion d'une tension continue en un signal oscillant et application du signal oscillant entre les deux électrodes isolées électriquement du coupleur au corps humain (110) afin d'induire un courant ou un champ électrique à l'intérieur du corps de l'utilisateur ;
un sous-système de réception (116) raccordé électriquement au coupleur au corps humain et configuré pour recevoir le signal artificiel lié au corps ; et
un sous-système de redressement (118) couplé au sous-système de réception et
configuré pour convertir le signal artificiel lié au corps en le courant continu pour son utilisation par le composant électronique.

2. Le dispositif de collecte d'énergie monté sur la tête de la revendication 1, dans lequel :
le coupleur au corps humain est couplé capacitivement au corps de l'utilisateur ;
le dispositif de collecte d'énergie monté sur la tête comprend en outre :
une surface médiale qui est tournée vers la tête de l'utilisateur lorsque le dispositif de collecte d'énergie monté sur la tête est porté par l'utilisateur ; et
une surface latérale qui est tournée à l'opposé de la tête de l'utilisateur lorsque le dispositif de collecte d'énergie monté sur la tête est porté par l'utilisateur ;
la première électrode est couplée à la surface médiale du dispositif de collecte d'énergie monté sur la tête de telle sorte que la première électrode est en contact avec la tête de l'utilisateur ; et
la deuxième électrode est couplée à la surface latérale du dispositif de collecte d'énergie monté sur la tête de telle sorte que la deuxième électrode est en contact avec de l'air entourant le corps de l'utilisateur.

3. Le dispositif de collecte d'énergie monté sur la tête de la revendication 1, dans lequel :
le coupleur au corps humain est couplé galvaniquement au corps de l'utilisateur ;
le dispositif de collecte d'énergie monté sur la tête comprend en outre une surface médiale qui est tournée vers la tête de l'utilisateur lorsque le dispositif de collecte d'énergie monté sur la tête est porté par l'utilisateur ; la première électrode est couplée à la surface médiale du dispositif de collecte d'énergie monté sur la tête de telle sorte que la première électrode est en contact avec la tête de l'utilisateur ; et
la deuxième électrode est couplée à la surface médiale du dispositif de collecte d'énergie monté sur la tête de telle sorte que la deuxième électrode est en contact avec la tête de l'utilisateur.

4. Le dispositif de collecte d'énergie monté sur la tête de la revendication 1, le dispositif de collecte d'énergie monté sur la tête étant un afficheur monté sur la tête.

5. Le dispositif de collecte d'énergie monté sur la tête de la revendication 4, dans lequel :
l'afficheur monté sur la tête comprend en outre un coussin d'interface faciale dimensionné pour être en aboutement avec une portion faciale de l'utilisateur ; et
la première électrode forme une partie intégrante du coussin d'interface faciale.

6. Le dispositif de collecte d'énergie monté sur la tête de la revendication 4, dans lequel :
l'afficheur monté sur la tête comprend en outre :
un afficheur ;
un pont couplé à l'afficheur et dimensionné pour reposer sur le nez de l'utilisateur ; et
une branche couplée à l'afficheur et dimensionnée pour reposer sur une oreille de l'utilisateur ; et
la première électrode forme une partie intégrante avec un élément parmi :
le pont ; ou
la branche.

7. Le dispositif de collecte d'énergie monté sur la tête de la revendication 1, le dispositif de collecte d'énergie monté sur la tête étant une lentille de contact intelligente configurée pour améliorer la vision de l'utilisateur.

8. Un système d'échange d'énergie (100) comprenant :
un dispositif d'approvisionnement en énergie (106) comprenant :
une source d'approvisionnement en énergie (120) ;
un coupleur au corps humain (122) configuré pour appliquer, au corps d'un utilisateur (104), un signal artificiel lié au corps, le coupleur au corps humain (122) comprenant une première électrode isolée électriquement (124) et une deuxième électrode isolée électriquement (126) ;
et un sous-système d'émission raccordé électriquement à la source d'approvisionnement en énergie (120) et au coupleur au corps humain (122) et configuré pour émettre le signal artificiel lié au corps à travers le corps de l'utilisateur, le signal artificiel lié au corps étant émis par conversion d'une tension continue en un signal oscillant et application du signal oscillant entre les deux électrodes isolées électriquement du coupleur au corps humain afin d'induire un courant ou un champ électrique à l'intérieur du corps de l'utilisateur ; et
un dispositif de collecte d'énergie monté sur la tête (102) comprenant :
un composant électronique (108) qui est alimenté à l'aide d'un courant continu ; et
**caractérisé par** :
un coupleur au corps humain (110) supplémentaire configuré pour conduire le signal artificiel lié au corps provenant du corps de l'utilisateur (104), le coupleur au corps humain comprenant une troisième électrode isolée électriquement (112) et une quatrième électrode isolée électriquement (114) ;
un sous-système de réception (116) raccordé électriquement au coupleur au corps humain supplémentaire et configuré pour recevoir le signal artificiel lié au corps ; et
un sous-système de redressement (118) couplé au sous-système de réception et
configuré pour convertir le signal artificiel lié au corps en le courant continu pour son utilisation par le composant électronique (108).

9. Le système d'échange d'énergie de la revendication 8, dans lequel :
le coupleur au corps humain est couplé capacitivement au corps de l'utilisateur ;
le dispositif d'approvisionnement en énergie comprend en outre :
une surface médiale qui est tournée vers le corps de l'utilisateur lorsque le dispositif d'approvisionnement en énergie est porté par l'utilisateur ; et
une surface latérale qui est tournée à l'opposé du corps de l'utilisateur lorsque le dispositif d'approvisionnement en énergie est porté par l'utilisateur ;
la première électrode est couplée à la surface médiale du dispositif d'approvisionnement en énergie de telle sorte que la première électrode est en contact avec le corps de l'utilisateur ; et
la deuxième électrode est couplée à la surface latérale du dispositif d'approvisionnement en énergie de telle sorte que la deuxième électrode est en contact avec de l'air entourant le corps de l'utilisateur.

10. Le système d'échange d'énergie de la revendication 8, dans lequel :
le coupleur au corps humain est couplé galvaniquement au corps de l'utilisateur ;
le dispositif d'approvisionnement en énergie comprend en outre une surface médiale qui est tournée vers le corps de l'utilisateur lorsque le dispositif d'approvisionnement en énergie est porté par l'utilisateur ;
la première électrode est couplée à la surface médiale du dispositif d'approvisionnement en énergie de telle sorte que la première électrode est en contact avec le corps de l'utilisateur : et la deuxième électrode est couplée à la surface médiale du dispositif d'approvisionnement en énergie de telle sorte que la première électrode est en contact avec le corps de l'utilisateur.

11. Le système d'échange d'énergie de la revendication 8, dans lequel le dispositif de collecte d'énergie monté sur la tête est un afficheur monté sur la tête.

12. Le système d'échange d'énergie de la revendication 11, dans lequel :
l'afficheur monté sur la tête comprend en outre un coussin d'interface faciale dimensionné pour être en aboutement avec une portion faciale de l'utilisateur ; et
la troisième électrode forme une partie intégrante du coussin d'interface faciale.

13. Le système d'échange d'énergie de la revendication 11, dans lequel le dispositif d'approvisionnement en énergie est un téléphone intelligent, une montre intelligente, est un bloc-piles auxiliaire, un dispositif informatique portable ou un organe de commande tenu en main utilisé par un système de réalité virtuelle ou un système de réalité augmentée.

14. Le système d'échange d'énergie de la revendication 13, dans lequel lorsque le dispositif d'approvisionnement en énergie est un bloc-piles auxiliaire, le bloc-piles auxiliaire est configuré pour être porté autour d'au moins un élément parmi le poignet de l'utilisateur et le cou de l'utilisateur.

15. Un procédé mis en œuvre par ordinateur comprenant et **caractérisé par** :
la réception, par l'intermédiaire d'un coupleur au corps humain (110) d'un dispositif de collecte d'énergie monté sur la tête (102), d'un signal artificiel lié au corps provenant du corps d'un utilisateur (104), dans lequel :
le signal artificiel lié au corps est émis par un dispositif d'approvisionnement en énergie (106) à travers le corps de l'utilisateur, le signal artificiel lié au corps étant émis par conversion d'une tension continue en un signal oscillant et application du signal oscillant entre deux électrodes isolées électriquement (124, 126) du coupleur au corps humain afin d'induire un courant ou un champ électrique à l'intérieur du corps de l'utilisateur ;
le dispositif de collecte d'énergie monté sur la tête (102) comprend un composant électronique (108) qui est alimenté à l'aide d'un courant continu ; et
le coupleur au corps humain (110) est configuré pour conduire le signal artificiel lié au corps provenant du corps de l'utilisateur et comprend une première électrode isolée électriquement (112) et une deuxième électrode isolée électriquement (114),
la conversion, par le biais d'un sous-système de réception (118) au niveau du dispositif de collecte d'énergie monté sur la tête, du signal artificiel lié au corps en le courant continu pour son utilisation par le composant électronique (108) ; et
l'application, au niveau du dispositif de collecte d'énergie monté sur la tête, du courant continu au composant électronique (108).
